# EUROPEAN PATENT APPLICATION

(11) **EP 4 686 314 A1**
(43) Date of publication of application: **28.01.2026**
(21) Application number: 24785152.0
(22) Date of filing: 02.04.2024
(51) Int. Cl.: H04W 76/15, H04L 5/00, H04W 72/50, H04W 84/12

(54) **METHOD AND DEVICE FOR MULTI-LINK COMMUNICATION IN WIRELESS LAN**

(30) Priority: 04.04.2023 KR 20230044193
(71) Applicant: Hyundai Motor Company, Seoul 06797 (KR); Kia Corporation, Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR); MOON, Ju Seong, Osan-si, Gyeonggi-do 18101 (KR)
(74) Representative: Isarpatent
(86) International application number: PCT/KR2024/004215
(87) International publication number: WO 2024/210446

(57) **Abstract**

A method and apparatus for multi-link communication in a wireless LAN are provided. A method of a first access point (AP) multi-link device (MLD) according to embodiments of the present disclosure for achieving the object may comprise decoding a first frame transmitted and received between a station (STA) MLD and a second AP MLD on a first link and in case that the first link and the second link are a non-simultaneous transmit and receive (NSTR) link pair for the STA MLD, configuring a transmission prohibition period on the second link based on one or more fields included in the first frame. Transmission of a second frame by the first AP MLD to the STA MLD is restricted in the transmission prohibition period.

## Description

### Technical Field

The present disclosure relates to a wireless local area network (LAN) communication technology, and more particularly, to a communication technology using multiple links in a wireless LAN.

### Background Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

The standards using the wireless LAN technology are being standardized as IEEE 802.11 standards mainly in the Institute of Electrical and Electronics Engineers (IEEE). As the above-described wireless LAN technology has been developed and spread, applications using the wireless LAN technology has been diversified, and a demand for a wireless LAN technology supporting a high throughput and/or high reliability has arisen.

As applications requiring higher throughput and/or applications requiring real-time transmission occur, wireless LAN may support communication using an expanded frequency bandwidth and an efficient retransmitting operation. In addition, wireless LAN may support an operation of simultaneously using a plurality of channels or a plurality of links. In other words, wireless LAN may support multi-link transmission. Methods for improving efficiency of multi-link transmission in wireless LANs are needed.

Meanwhile, the technologies that are described in the Background section are written to improve the understanding of the background of the present disclosure and may include content that is not already known to those of ordinary skill in the art to which the present disclosure belongs.

### Disclosure

### Technical Problem

To solve the above problem, an object of the present disclosure is to provide a method and apparatus for multi-link communication in a wireless local area network (LAN).

### Technical Solution

A method of a first access point (AP) multi-link device (MLD) according to embodiments of the present disclosure for achieving the object may comprise decoding a first frame transmitted and received between a station (STA) MLD and a second AP MLD on a first link and in case that the first link and the second link are a non-simultaneous transmit and receive (NSTR) link pair for the STA MLD, configuring a transmission prohibition period on the second link based on one or more fields included in the first frame. Transmission of a second frame by the first AP MLD to the STA MLD is restricted in the transmission prohibition period.

The first frame may be an uplink (UL) frame transmitted by the STA MLD to the second AP MLD or a downlink (DL) frame transmitted by the second AP MLD to the STA MLD.

The transmission prohibition period may be configured to correspond to a length indicated by a duration field included in a medium access control (MAC) header of the first frame.

The transmission prohibition period may be configured based on a length of the first frame indicated by a field included in a preamble of the first frame.

The transmission prohibition period may be configured to correspond to a transmit opportunity (TXOP) of the STA MLD on the first link.

The method may further comprise performing an association procedure between the STA MLD and the first AP MLD, and in the association procedure, capability information of the STA MLD may be received and the capability information may include information indicating that the STA MLD does not support STR operation.

Each of the STA MLD, the first AP MLD and the second AP MLD may operate in multiple links including the first link and the second link, and the STA MLD is associated with the first AP MLD and the second AP MLD.

A method of a station (STA) multi-link device (MLD) ) according to embodiments of the present disclosure for achieving the object may comprise transmitting a first frame including configuration information of a transmission prohibition period to a first access point (AP) MLD on a first link and transmitting a second frame to a second AP MLD on the first link. The transmission prohibition period is configured on a second link based on the configuration information and transmission of a third frame by the first AP MLD to the STA MLD is restricted in the transmission prohibition period.

The configuration information of the transmission prohibition period may include at least one of information on link(s) to which the transmission prohibition period is applied, a length of the transmission prohibition period, a start time point of the transmission prohibition period, an end time point of the transmission prohibition period or information on a communication node where the transmission prohibition period is configured.

The first frame may be a first medium access control (MAC) layer protocol data unit (MPDU), the second frame may be a second MPDU, and the first MPDU and the second MPDU may be included in one physical layer protocol data unit (PPDU) in the form of an aggregated (A)-MPDU.

The transmission prohibition period may be configured to correspond to a transmit opportunity (TXOP) of the STA MLD.

The first frame may further include assisted AP request (AAR) control information, and the AAR control information may indicate that a trigger-based transmission procedure is performed after the transmission prohibition period.

The method may further comprise performing a first association procedure between the STA MLD and the first AP MLD and performing a second association procedure between the STA MLD and the second AP MLD, and, in one of the first association procedure or the second association procedure, capability information of the STA MLD may be transmitted, and the capability information may include information indicating that the STA MLD does not support simultaneous transmit and receive (STR) operation.

A method of a station (STA) multi-link device (MLD) according to embodiments of the present disclosure for achieving the object may comprise transmitting a first frame including configuration information of a transmission prohibition period to a first access point (AP) MLD on a first link and transmitting a second frame to a second AP MLD on a second link. The transmission prohibition period is configured on the first link based on the configuration information and transmission of a third frame by the first AP MLD to the STA MLD is restricted in the transmission prohibition period.

The configuration information of the transmission prohibition period may include at least one of information on link(s) to which the transmission prohibition period is applied, a length of the transmission prohibition period, a start time point of the transmission prohibition period, an end time point of the transmission prohibition period or information on a communication node where the transmission prohibition period is configured.

The first frame and the second frame may be transmitted based on a synchronous transmission method, and in case that the synchronous transmission method is used, a first start time point of the first frame may be the same as a second start time point of the second frame or a difference between the first start time point and the second start time point may be within a predefined range.

The transmission prohibition period may be configured to correspond to a transmit opportunity (TXOP) of the STA MLD.

The first frame may further include assisted AP request (AAR) control information, and the AAR control information may indicate that a trigger-based transmission procedure is performed after the transmission prohibition period.

In the trigger-based transmission procedure, in case that a trigger frame is received from the first AP MLD, the STA MLD may transmit a fourth frame to the first AP MLD.

The method may further comprise performing a first association procedure between the STA MLD and the first AP MLD and performing a second association procedure between the STA MLD and the second AP MLD. In one of the first association procedure or the second association procedure, capability information of the STA MLD may be transmitted, and the capability information may include information indicating that the STA MLD does not support simultaneous transmit and receive (STR) operation.

### Advantageous Effects

According to the present disclosure, in a wireless local area network (LAN), a STA (station) multi-link device (MLD) (e.g., an STA associated with an STA MLD) may communicate with a plurality of AP (access point) MLDs (e.g., a plurality of APs). The multiple links in which the STA MLD operates may be a non-simultaneous transmit and receive (NSTR) link pair where simultaneous transmission and reception operations cannot be performed. The STA MLD may communicate with one AP MLD among the plurality of AP MLDs on at least one link of the NSTR link pair. Communication between the STA MLD and another AP MLD may fail. A transmission prohibition period may be configured by the AP MLD or the STA MLD within a transmission period of the STA MLD. Transmission of the STA MLD may be prohibited (e.g., restricted) in the transmission prohibition period, and thus communication failure of the STA MLD may be reduced. The AP MLD may not transmit a frame (e.g., a data frame) to a specific STA MLD during the transmission prohibition period. When the transmission prohibition period is released, the AP MLD may assign a communication period to the STA MLD based on the request of the STA MLD. Alternatively, the AP MLD may assign a communication period to the STA MLD without a request from the STA MLD. In an environment where multiple APs (e.g., multiple AP MLDs) exist, multi-link communication may be performed smoothly, and the efficiency of multi-link communication may be improved.

### Description of Drawings

FIG. 1 is a block diagram illustrating a first embodiment of a communication node constituting a wireless local area network (LAN) system.
FIG. 2 is a conceptual diagram illustrating a first embodiment of multi-links configured between multi-link devices (MLDs).
FIGS. 3a and 3b are timing diagrams illustrating embodiments of multi-link communication.
FIGS. 4a and 4b are timing diagrams illustrating embodiments of multi-link communication.
FIGS. 5a and 5b are timing diagrams illustrating embodiments of multi-link communication.
FIGS. 6a and 6b are timing diagrams illustrating embodiments of multi-link communication.
FIG. 7 is a timing diagram illustrating embodiments of multi-link communication.
FIGS. 8a and 8b are timing diagrams illustrating embodiments of multi-link communication.

### Mode for Invention

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a 'wireless communication network'.

In an embodiment, "configuring an operation (e.g., transmission operation)" may mean signaling "configuration information (e.g., information element, parameter) for the operation" and/or "information indicating that the operation is performed". "Configuring an information element (e.g., parameter)" may mean signaling the information element. "Configuring a resource (e.g., resource area)" may mean signaling configuration information of the resource. Frames proposed in the present disclosure may be commonly referred to as a first frame, a second frame, a third frame and the like. A transmission time point of a frame may mean a transmission start time point or a transmission end time point, and a reception time point of a frame may mean a reception start time point or a reception end time point. A transmission time point may be interpreted to correspond to a reception time point. A time point may be interpreted as a time, and a time may be interpreted as a time point.

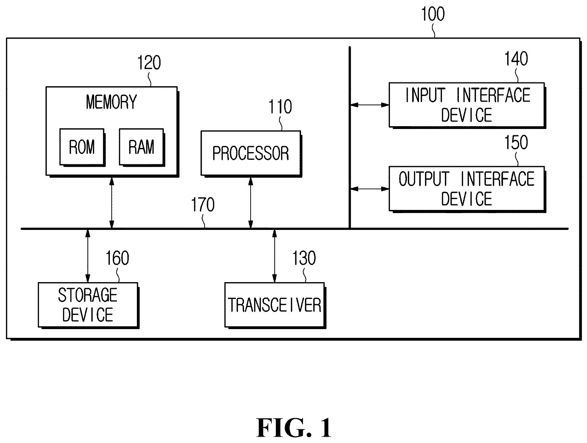

FIG. 1 is a block diagram illustrating a first exemplary embodiment of a communication node constituting a wireless LAN system.

As shown in FIG. 1, a communication node 100 may be an access point, a station, an access point (AP) multi-link device (MLD), or a non-AP MLD. The access point may refer to an AP, and the station may refer to a STA or a non-AP STA. The operating channel width supported by the access point may be 20 megahertz (MHz), 80 MHz, 160 MHz, or the like. The operating channel width supported by the station may be 20MHz, 80MHz, or the like.

The communication node 100 may include at least one processor 110, a memory 120, and a plurality of transceivers 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, and the storage device 160 through a dedicated interface.

The processor 110 may execute at least one instruction stored in at least one of the memory 120 and the storage device 160. The processor 110 may refer to a central processing unit (CPU), a graphics processing unit (GPU), or a dedicated processor on which the methods according to the exemplary embodiments of the present invention are performed. Each of the memory 120 and the storage device 160 may be configured as at least one of a volatile storage medium and a nonvolatile storage medium. For example, the memory 120 may be configured with at least one of a read only memory (ROM) and a random access memory (RAM).

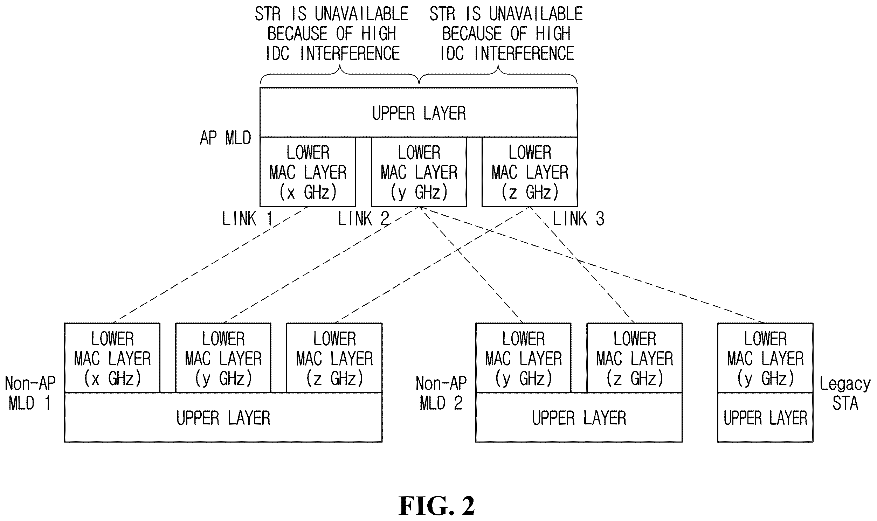

FIG. 2 is a conceptual diagram illustrating a first exemplary embodiment of multi-links configured between MLDs.

As shown in FIG. 2, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) (STA(s)) affiliated with the non-AP MLD may have different MAC addresses. Each of the APs having different MAC addresses may be in charge of each link among multiple links supported by the AP MLD, and may perform a role of an independent AP.

Each of the STAs having different MAC addresses may be in charge of each link among multiple links supported by the non-AP MLD, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links (i.e., multi-link) by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a 'communication node' or 'lower entity'. The communication node (i.e., AP) may operate under control of an upper layer (or the processor 110 shown in FIG. 1). The non-AP MLD may include a plurality of STAs, and the plurality of STAs may operate in different links. Each of the plurality of STAs may be referred to as a 'communication node' or 'lower entity'. The communication node (i.e., STA) may operate under control of an upper layer (or the processor 110 shown in FIG. 1).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, the respective links may be referred to as a link 1, a link 2, and a link 3. A link number may be set by the AP, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g., a band separation between the link 1 and the link 2 in the frequency domain) is sufficient, the MLD may perform an STR operation. For example, the MLD may transmit a physical (PHY) layer protocol data unit (PPDU) 1 using the link 1 among multiple links, and may receive a PPDU 2 using the link 2 among multiple links. On the other hand, if the MLD performs the STR operation when the band separation between multiple links is insufficient, in-device coexistence (IDC) interference, which is interference between the multiple links, may occur. Accordingly, when the bandwidth separation between multiple links is not sufficient, the MLD may not be able to perform an STR operation. A link pair having the above-described interference relationship may be a non-simultaneous transmit and receive (NSTR)-limited link pair. Here, the MLD may be referred to as 'NSTR AP MLD' or 'NSTR non-AP MLD'.

For example, a multi-link including a link 1, a link 2, and a link 3 may be configured between the AP MLD and the non-AP MLD 1. If the band separation between the link 1 and the link 3 is sufficient, the AP MLD may perform an STR operation using the link 1 and the link 3. In other words, the AP MLD may transmit a frame using the link 1 and may receive a frame using the link 3. If the band separation between the link 1 and the link 2 is not sufficient, the AP MLD may not be able to perform an STR operation using the link 1 and the link 2. If the band separation between the links 2 and 3 is not sufficient, the AP MLD may not be able to perform an STR operation using the link 2 and 3.

Meanwhile, in a wireless LAN system, a negotiation procedure for a multi-link operation may be performed in an access procedure between a STA and an AP. A device (e.g., AP or STA) supporting a multi-link may be referred to as a multi-link device (MLD). An AP supporting a multi-link may be referred to as an AP MLD, and a STA supporting a multi-link may be referred to as a non-AP MLD or STA MLD. The AP MLD may have a physical address (e.g., MAC address) for each link. The AP MLD may be implemented as if an AP in charge of each link exists separately. A plurality of APs may be managed within one AP MLD. Accordingly, coordination between the plurality of APs belonging to the same AP MLD may be possible. The STA MLD may have a physical address (e.g., MAC address) for each link. The STA MLD may be implemented as if an STA in charge of each link exists separately. A plurality of STAs may be managed within one STA MLD. Accordingly, coordination between the plurality of STAs belonging to the same STA MLD may be possible.

For example, an AP1 of the AP MLD and a STA1 of the STA MLD may each be in charge of a first link and may communicate using the first link. An AP2 of the AP MLD and a STA2 of the STA MLD may each be in charge of a second link, and may communicate using the second link. The STA2 may receive state change information for the first link on the second link. In this case, the STA MLD may collect information (e.g., state change information) received from each link, and may control operations performed by the STA1 based on the collected information.

Next, methods for transmitting and receiving data in a wireless LAN system will be described. When a method (e.g., transmission or reception of a signal) performed in a first communication node among communication nodes is described, a second communication node corresponding to it may perform a method (e.g., reception or transmission of a signal) corresponding to the method performed in the first communication node. In other words, when an operation of an STA is described, an AP corresponding to it may perform an operation corresponding to the operation of the STA. On the other hand, when an operation of an AP is described, an STA corresponding to it may perform an operation corresponding to the operation of the AP.

In the present disclosure, an operation of an STA may be interpreted as an operation of an STA MLD, and an operation of an STA MLD may be interpreted as an operation of an STA. An operation of an AP may be interpreted as an operation of an AP MLD, and an operation of an AP MLD may be interpreted as an operation of an AP. An STA of an STA MLD may mean an STA connected with the STA MLD, and an AP of an AP MLD may mean an AP connected with the AP MLD. When an STA MLD includes a first STA operating on a first link and a second STA operating on a second link, an operation of the STA MLD on the first link may be interpreted as an operation of the first STA, and an operation of the STA MLD on the second link may be interpreted as an operation of the second STA. When an AP MLD includes a first AP operating on a first link and a second AP operating on a second link, an operation of the AP MLD on the first link may be interpreted as an operation of the first AP, and an operation of the AP MLD on the second link may be interpreted as an operation of the second AP.

Embodiments of the present disclosure are applicable to a single link as well as multiple links. In other words, embodiments described as being applicable to multiple links are applicable to a single link in the same and/or similar manner. Embodiments described as being applicable to a single link are applicable to multiple links in the same and/or similar manner. In the present disclosure, a communication method will be described in a situation where a single STA MLD is connected to multiple AP MLDs. Embodiments of the present disclosure are applicable to a situation where a single STA is connected to multiple APs.

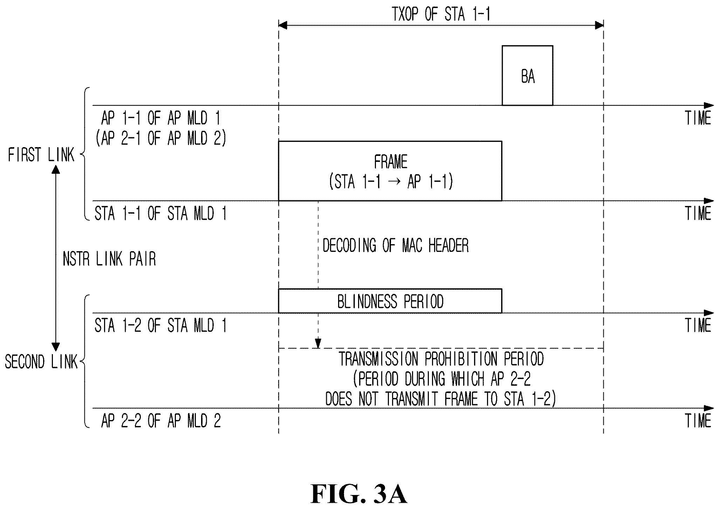

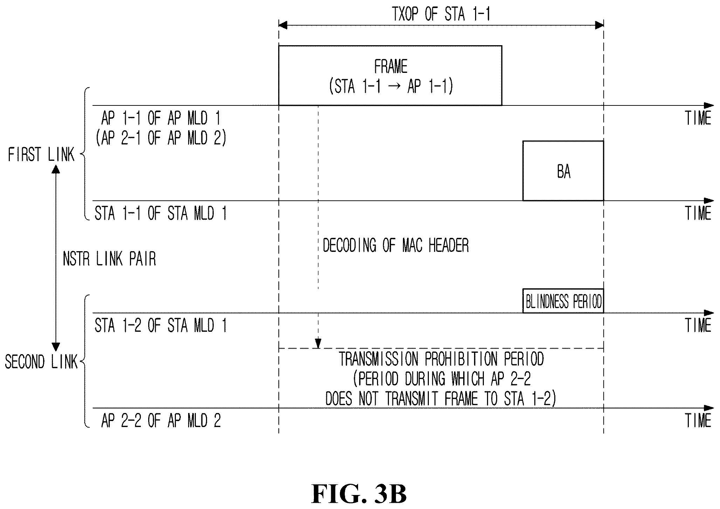

FIGS. 3a and 3b are timing diagrams illustrating embodiments of multi-link communication.

Referring to FIGS. 3a and 3b, STA MLD 1 may operate in multiple links. STA MLD 1 may access (e.g., associate) one or more AP MLDs. For example, STA MLD 1 may be simultaneously associated with AP MLD 1 and AP MLD 2. AP MLD 1 may be a primary AP MLD, and AP MLD 2 may be a secondary AP MLD. STA MLD 1 may perform an association procedure with each of AP MLD 1 and AP MLD 2. In the association procedure, STA MLD 1 may transmit a frame including capability information of the STA MLD 1 (e.g., a probe request frame, an association request frame, etc.) to AP MLD 1 and/or AP MLD 2. The capability information may include at least one of information indicating whether STA MLD 1 supports STR operation, information indicating whether STA MLD 1 supports EMLSR (enhanced multi-link single-radio) operation, information indicating whether STA MLD 1 supports joint transmission by multiple APs (e.g., multiple AP MLDs), or information indicating whether STA MLD 1 supports preemption operation. AP MLD 1 and AP MLD 2 may be connected via a backhaul link. A frame exchange procedure between AP MLD 1 and AP MLD 2 may be performed via the backhaul link. AP MLD 1 and AP MLD 2 may transmit frames (e.g., data frames) to STA MLD based on a coordination transmission scheme (e.g., a joint transmission scheme).

AP MLD 1 and AP MLD 2 may include separate MAC layer element(s) (e.g., an upper MAC sublayer, a lower MAC sublayer, and/or a MAC layer management entity (MLME)). A MAC layer element may mean a MAC layer entity. At least one of the MAC layer element(s) of AP MLD 1 and AP MLD 2 may be an integrated element (e.g., an interlocked element, a linked element). The integrated element may be commonly included in AP MLD 1 and AP MLD 2. For example, AP MLD 1 and AP MLD 2 may include an integrated upper MAC sublayer. AP MLD 1 and AP MLD 2 may not include an integrated lower MAC sublayer.

AP MLD 1 and AP MLD 2 may assign (e.g., allocate, set) separate AIDs (association identifiers) to STA MLD 1. For example, AP MLD 1 may assign AID 1111 to STA MLD 1. AP MLD 2 may assign AID 2222 to STA MLD 1. **In** other words, the AID assigned by AP MLD 1 to STA MLD 1 may be 1111, and the AID assigned by AP MLD 2 to STA MLD 1 may be 2222. Alternatively, AP MLD 1 and AP MLD 2 may manage the same AID for STA MLD 1. For example, AP MLD 1 and AP MLD 2 may assign AID 1111 to STA MLD 1, and the common AID for STA MLD 1 may be 1111. STA MLD 1 may be identified and/or managed by a common AID (e.g., 1111).

Each of the AP MLD and the STA MLD may operate in multiple links. The multiple links may include a first link and a second link. An STA associated with STA MLD 1 (e.g., non-AP MLD) operating on the first link may be referred to as STA 1-1, and an STA associated with STA MLD 1 operating on the second link may be referred to as STA 1-2. STA 1-1 and STA 1-2 may be associated with STA MLD 1. An STA associated with STA MLD 1 operating in the x-th link may be referred to as STA 1-x. x may be a natural number. An AP associated with AP MLD 1 operating on the first link may be referred to as AP 1-1, and an AP associated with AP MLD 1 operating on the second link may be referred to as AP 1-2. AP 1-1 and AP 1-2 may be associated with AP MLD 1. An AP associated with AP MLD 1 operating in the x-th link may be referred to as AP 1-x. An AP associated with AP MLD 2 operating on the first link may be referred to as AP 2-1, and an AP associated with AP MLD 2 operating on the second link may be referred to as AP 2-2. AP 2-1 and AP 2-2 may be associated with AP MLD 2. An AP associated with AP MLD 2 operating in the x-th link may be referred to as AP 2-x.

AP MLD 1 and AP MLD 2 may have at least one common link (e.g., common frequency, common operating frequency). For example, AP MLD 1 and AP MLD 2 may operate on a first link. Even if the operating frequencies (e.g., links) of AP MLD 1 and AP MLD 2 are the same, the link IDs (e.g., frequency identifiers) managed by AP MLD 1 and AP MLD 2 may be different. When AP MLD 1 and AP MLD 2 operate on the first link, the link ID managed by AP MLD 1 may be different from the link ID managed by AP MLD 2. "When the AP MLDs have different link IDs and the operating frequencies corresponding to the different link IDs are the same", the different link IDs may indicate the same link. Alternatively, AP MLD 1 and AP MLD 2 may not have a common link.

The operating links (e.g., operating frequency) of STA MLD 1 may include a first link and a second link. The first link and the second link may be an NSTR link pair for STA MLD 1. In the NSTR link pair, STA MLD 1 may not perform the STR operation. Additionally, STA MLD 1 may perform an EMLSR operation on the first link and the second link. The first link and the second link may be EMLSR links. In other words, when STA MLD 1 performs the EMLSR operation on the first link and the second link, the first link and the second link may be an NSTR link pair and an EMLSR link. AP MLD 1 and AP MLD 2 may operate on the first link. AP MLD 2 may operate on the second link. STA MLD 1 may communicate with AP MLD 1 on the first link, and STA MLD 1 may communicate with AP MLD 2 on the second link.

In the embodiment of FIG. 3a, if there is a frame (e.g., a MAC layer PDU (Protocol Data Unit)), an Aggregated MPDU (A-MPDU), a Physical layer PDU (PPDU), or other data unit) to be transmitted to AP 1-1 on the first link, STA 1-1 of STA MLD 1 may perform a channel access operation on the first link. The channel access operation may be an operation based on EDCA (enhanced distributed channel access). In other words, the channel access operation may be an EDCA operation. If a backoff counter (e.g., an EDCA backoff counter) reaches 0, STA 1-1 may initiate frame transmission to AP 1-1. "The backoff counter reaching 0" may mean "the backoff operation (e.g., the channel access operation, the EDCA operation) is successful."

STA 1-1 may set a TXOP (transmit opportunity). When the backoff counter reaches 0 and the EDCAF (EDCA function) of STA 1-1 determines frame transmission, the TXOP of STA 1-1 may be set. Alternatively, when "transmission of a frame (e.g., initial transmission) is performed and a response frame (e.g., ACK (acknowledgement) frame, BA (block ACK) frame) to the frame is successfully received", the TXOP may be set. The response frame may mean an ACK frame and/or a BA frame. STA 1-1 may set a duration field indicating a length of TXOP, generate a MAC header including the duration field, and transmit a frame including the MAC header. Alternatively, the duration field of the MAC header included in the frame may indicate, for each frame, an interval including a transmission time for transmission of the frame and a reception time for reception of a response frame to the frame. The duration field may indicate more than the interval including the transmission time and the reception time. One or more frames may be exchanged within a TXOP.

AP 2-1 may successfully decode one or more MPDUs included in a frame transmitted by STA 1-1, verify the MAC header of each of the one or more MPDUs, and verify the TA (transmitter address) field and/or the duration field included in the MAC header. "Successful decoding of a frame (e.g., PPDU, MPDU)" may mean "successful frame check sequence (FCS)." In the detection procedure of a PPDU including an MPDU, AP 2-1 may verify the length of the PPDU (e.g., time length, data length) by decoding a preamble, which is a physical layer header. In other words, the preamble may include information (e.g., a field) indicating the length of the PPDU.

The TA (transmitter address) field may be set to the address of STA 1-1 of STA MLD 1 (e.g., the MAC address of STA 1-1). Based on the address of STA 1-1, AP MLD 2 may know that "STA MLD 1 is transmitting a frame on the first link." AP MLD 2 may determine that STA MLD 1 is an NSTR STA MLD, and that the first link and the second link are an NSTR link pair. An NSTR STA MLD may mean an STA MLD that cannot perform the STR operation. Based on the TA field, the duration field, and/or the preamble of the PPDU (e.g., the length of the PPDU indicated by the preamble), AP 2-2 of AP MLD 2 may configure a transmission prohibition period during which frame transmission to STA 1-2 operating on the second link belonging to the NSTR link pair (e.g., STA 1-2 associated with STA MLD 1) is prohibited. The transmission prohibition period may mean a puncturing period. In the transmission prohibition period, AP 2-2 may not transmit a frame to STA 1-2. In other words, AP 2-2 transmitting a frame to STA 1-2 may be prohibited (e.g., restricted) during the transmission prohibition period. It may be possible for AP 2-2 to transmit the frame to an STA other than STA 1-2 during the transmission prohibition period. The length of the transmission prohibition period may be set to correspond to the length indicated by the duration field of the MAC header (e.g., the MAC header of the frame transmitted by STA 1-1). After the transmission prohibition period set for AP 2-2 of AP MLD 2 ends, AP 2-2 of AP MLD 2 may transmit the frame to STA 1-2 on the second link. If there is only a frame to be transmitted to STA 1-2 in the transmission queue of AP 2-2, AP 2-2 may transmit the frame immediately if the medium is idle during the arbitrary interframe space (AIFS) [access categories (AC)] after the end of the transmission prohibition period. Alternatively, if the medium of AP 2-2 is not idle or for fairness, AP 2-2 may select a new backoff counter and transmit the frame if the backoff operation based on the new backoff counter is successful.

In the embodiment of FIG. 3b, if there is a frame (e.g., MPDU, A-MPDU, PPDU, or other data unit) to be transmitted to STA 1-1 on the first link, AP 1-1 of AP MLD 1 may perform a channel access operation on the first link. The channel access operation may be an EDCA-based operation. In other words, the channel access operation may be an EDCA operation. If a backoff counter (e.g., an EDCA backoff counter) reaches 0, AP 1-1 may initiate frame transmission to STA 1-1. "The backoff counter reaching 0" may mean "the backoff operation (e.g., the channel access operation, the EDCA operation) is successful."

AP 1-1 may set a TXOP. When the backoff counter reaches 0 and the EDCAF of AP 1-1 determine frame transmission, the TXOP of AP 1-1 may be set. Alternatively, "when a transmission of a frame (e.g., an initial transmission) is performed and a response frame (e.g., an ACK frame, a BA frame) to the frame is successfully received", the TXOP may be set. The response frame may mean an ACK frame and/or a BA frame. AP 1-1 may set a duration field indicating a length of TXOP, generate a MAC header including the duration field, and transmit a frame including the MAC header. Alternatively, the duration field of the MAC header included in the frame may indicate, for each frame, an interval including a transmission time for transmitting the frame and a reception time for receiving a response frame to the frame. The duration field may indicate more than the interval including the transmission time and the reception time. One or more frames may be exchanged within a TXOP.

AP 2-1 may successfully decode one or more MPDUs included in a frame transmitted by AP 1-1, verify the MAC header of each of the one or more MPDUs, and verify the RA (receiver address) field and/or the duration field included in the MAC header. "Successful decoding of a frame (e.g., PPDU, MPDU)" may mean "FCS success." In the detection procedure of a PPDU including an MPDU, AP 2-1 may verify the length of the PPDU by decoding a preamble, which is a physical layer header. In other words, the preamble may include information (e.g., a field) indicating the length of the PPDU.

The RA field may be set to the address of STA 1-1 of STA MLD 1. Based on the address of STA 1-1, AP MLD 2 may know that "STA MLD 1 is receiving a frame on the first link". AP MLD 2 may determine that STA MLD 1 is an NSTR STA MLD, and that the first link and the second link are an NSTR link pair. An NSTR STA MLD may mean an STA MLD that cannot perform the STR operation. Based on the TA field, the duration field, and/or the preamble of the PPDU (e.g., the length of the PPDU indicated by the preamble), AP 2-2 of AP MLD 2 may configure a transmission prohibition period during which frame transmission to STA 1-2 operating on the second link belonging to the NSTR link pair (e.g., STA 1-2 associated with STA MLD 1) is prohibited. The transmission prohibition period may refer to a puncturing period. In the transmission prohibition period, AP 2-2 may not transmit a frame to STA 1-2. In other words, AP 2-2 transmitting a frame to STA 1-2 may be prohibited (e.g., restricted) during the transmission prohibition period. It may be possible for AP 2-2 to transmit the frame to an STA other than STA 1-2 during the transmission prohibition period. The length of the transmission prohibition period may be set to correspond to the length indicated by the duration field of the MAC header (e.g., the MAC header of the frame transmitted by AP 1-1). After the transmission prohibition period set for AP 2-2 of AP MLD 2 ends, AP 2-2 of AP MLD 2 may transmit the frame to STA 1-2 on the second link.

Alternatively, AP 2-2 of AP MLD 2 may transmit a frame to STA 1-2 according to the reception interval of STA 1-1 of STA MLD 1. Based on the PPDU length confirmed by decoding the PPDU by AP 2-1 of AP MLD 2, AP 2-2 of AP MLD 2 may determine the end time point of the frame transmitted to STA 1-2. The end time point of the frame transmitted by AP 2-2 to STA 1-2 may be set to be the same as the end time point of the PPDU transmitted by AP 1-1 to STA 1-1. AP 2-2 may set the end time point of the frame, such that a difference between the end time point of the frame transmitted by AP 2-2 to STA 1-2 and the end time point of the PPDU transmitted by AP 1-1 to STA 1-1 is within 8 us.

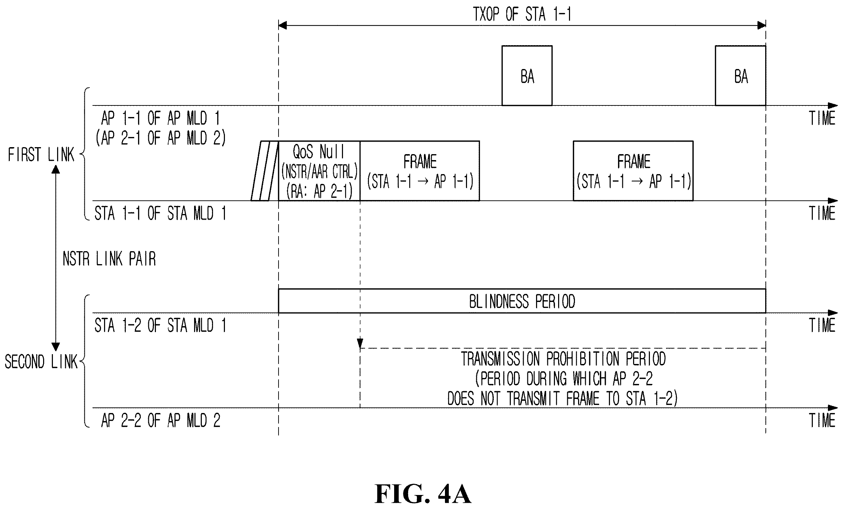

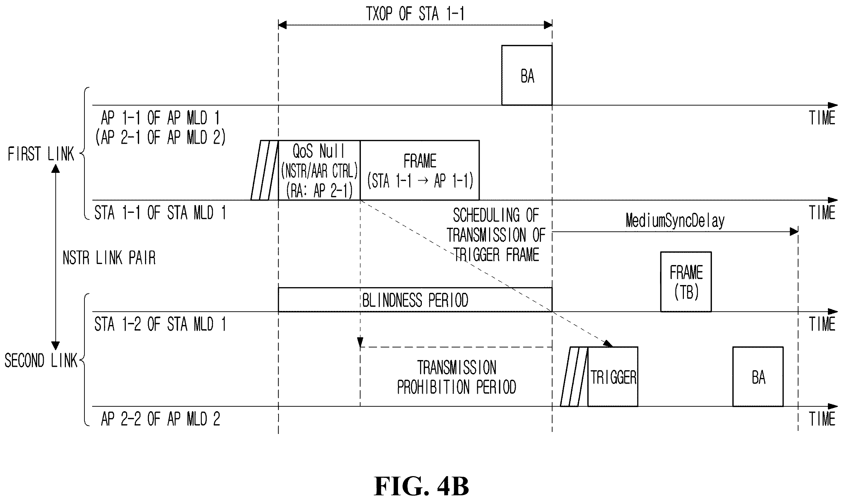

FIGS. 4a and 4b are timing diagrams illustrating embodiments of multi-link communication.

Referring to FIGS. 4A and 4B, STA MLD 1 may operate in multiple links. STA MLD 1 may access (e.g., associate) one or more AP MLDs. For example, STA MLD 1 may be simultaneously connected to AP MLD 1 and AP MLD 2. AP MLD 1 may be a primary AP MLD, and AP MLD 2 may be a secondary AP MLD. STA MLD 1 may perform an association procedure with each of AP MLD 1 and AP MLD 2. In the association procedure, STA MLD 1 may transmit a frame including capability information of the STA MLD 1 (e.g., a probe request frame, an association request frame, etc.) to AP MLD 1 and/or AP MLD 2. The capability information may include at least one of information indicating whether STA MLD 1 supports STR operation, information indicating whether STA MLD 1 supports EMLSR operation, information indicating whether STA MLD 1 supports joint transmission by multiple APs, or information indicating whether STA MLD 1 supports preemption operation. AP MLD 1 and AP MLD 2 may be connected via a backhaul link. A frame exchange procedure between AP MLD 1 and AP MLD 2 may be performed via the backhaul link. AP MLD 1 and AP MLD 2 may transmit a frame to STA MLD based on a coordination transmission scheme (e.g., a joint transmission scheme).

AP MLD 1 and AP MLD 2 may include separate MAC layer element(s) (e.g., an upper MAC sublayer, a lower MAC sublayer, and/or an MLME). A MAC layer element may mean a MAC layer entity. At least one of the MAC layer element(s) of AP MLD 1 and AP MLD 2 may be an integrated element (e.g., an interlocked element, a linked element). The integrated element may be commonly included in AP MLD 1 and AP MLD 2. For example, AP MLD 1 and AP MLD 2 may include an integrated upper MAC sublayer. AP MLD 1 and AP MLD 2 may not include an integrated lower MAC sublayer.

AP MLD 1 and AP MLD 2 may assign (e.g., allocate, set) separate AIDs to STA MLD 1. For example, AP MLD 1 may assign AID 1111 to STA MLD 1. AP MLD 2 may assign AID 2222 to STA MLD 1. In other words, the AID assigned by AP MLD 1 to STA MLD 1 may be 1111, and the AID assigned by AP MLD 2 to STA MLD 1 may be 2222. Alternatively, AP MLD 1 and AP MLD 2 may manage the same AID for STA MLD 1. For example, AP MLD 1 and AP MLD 2 may assign AID 1111 to STA MLD 1, and the common AID for STA MLD 1 may be 1111. STA MLD 1 may be identified and/or managed by a common AID (e.g., 1111).

Each of the AP MLD and the STA MLD may operate in multiple links. The multiple links may include a first link and a second link. An STA associated with STA MLD 1 (e.g., non-AP MLD) operating on the first link may be referred to as STA 1-1, and an STA associated with STA MLD 1 operating on the second link may be referred to as STA 1-2. STA 1-1 and STA 1-2 may be associated with STA MLD 1. An STA associated with STA MLD 1 operating in the x-th link may be referred to as STA 1-x. x may be a natural number. An AP associated with AP MLD 1 operating on the first link may be referred to as AP 1-1, and an AP associated with AP MLD 1 operating on the second link may be referred to as AP 1-2. AP 1-1 and AP 1-2 may be associated with AP MLD 1. An AP associated with AP MLD 1 operating in the x-th link may be referred to as AP 1-x. An AP associated with AP MLD 2 operating on the first link may be referred to as AP 2-1, and an AP associated with AP MLD 2 operating on the second link may be referred to as AP 2-2. AP 2-1 and AP 2-2 may be associated with AP MLD 2. An AP associated with AP MLD 2 operating in the x-th link may be referred to as AP 2-x.

AP MLD 1 and AP MLD 2 may have at least one common link (e.g., common frequency, common operating frequency). For example, AP MLD 1 and AP MLD 2 may operate on a first link. Even if the operating frequencies (e.g., links) of AP MLD 1 and AP MLD 2 are the same, the link IDs (e.g., frequency identifiers) managed by AP MLD 1 and AP MLD 2 may be different. When AP MLD 1 and AP MLD 2 operate on the first link, the link ID managed by AP MLD 1 may be different from the link ID managed by AP MLD 2. "When the AP MLDs have different link IDs and the operating frequencies corresponding to the different link IDs are the same", the different link IDs may indicate the same link. Alternatively, AP MLD 1 and AP MLD 2 may not have a common link.

The operating links (e.g., operating frequencies) of STA MLD 1 may include a first link and a second link. The first link and the second link may be an NSTR link pair for STA MLD 1. In the NSTR link pair, STA MLD 1 may not perform the STR operation. Additionally, STA MLD 1 may perform an EMLSR operation on the first link and the second link. The first link and the second link may be EMLSR links. In other words, when STA MLD 1 performs the EMLSR operation on the first link and the second link, the first link and the second link may be an NSTR link pair and an EMLSR link. AP MLD 1 and AP MLD 2 may operate on the first link. AP MLD 2 may operate on the second link. STA MLD 1 may communicate with AP MLD 1 on the first link, and STA MLD 1 may communicate with AP MLD 2 on the second link.

In the embodiment of FIG. 4a, if there is a frame (e.g., MPDU, A-MPDU, PPDU, or other data unit) to be transmitted to AP 1-1 on the first link, STA 1-1 of STA MLD 1 may perform a channel access operation on the first link. The channel access operation may be an EDCA-based operation. In other words, the channel access operation may be an EDCA operation. If a backoff counter (e.g., an EDCA backoff counter) reaches 0, STA 1-1 may initiate frame transmission to AP 1-1. "The backoff counter reaching 0" may mean "the backoff operation (e.g., the channel access operation, the EDCA operation) is successful."

STA 1-1 may set TXOP. When the backoff counter reaches 0 and the EDCAF of STA 1-1 determines frame transmission, the TXOP of STA 1-1 may be set. Alternatively, "when transmission of a frame (e.g., initial transmission) is performed and a response frame (e.g., ACK frame, BA frame) to the frame is successfully received", the TXOP may be set. The response frame may mean an ACK frame and/or a BA frame. The frame transmitted by STA 1-1 may have an A-MPDU form. In other words, the frame transmitted by STA 1-1 may include multiple MPDUs. The frame transmitted by STA 1-1 may include a first MPDU and a second MPDU. The first MPDU may be a QoS (quality of service) Null frame. The QoS Null frame may not include a body (e.g., a frame body). In other words, the QoS Null frame may be a MAC frame that only contains a MAC header and an FCS field. The QoS Null frame may be transmitted from STA 1-1 to AP 2-1. The second MPDU may be a data frame (e.g., an uplink (UL) data frame). The data frame may be transmitted from STA 1-1 to AP 1-1.

The QoS Null frame may include NSTR control information. The NSTR control information may include configuration information of a transmission prohibition period. The transmission prohibition period may mean a puncturing period. The configuration information of the transmission prohibition period may include at least one of information on link(s) to which the transmission prohibition period is applied (e.g., link bitmap, link identifier), the length of the transmission prohibition period, the start time point of the transmission prohibition period, the end time point of the transmission prohibition period, or information on a communication node (e.g., an identifier) where the transmission prohibition period is configured (e.g., applied) (e.g., an AP, a STA, an AP MLD, a STA MLD).

The NSTR control information may be included in a HT (high throughput) control field of the MAC header of the QoS Null frame in the form of A-control. The Ack policy field included in the QoS Null frame may be set to No Ack. If the Ack policy field is set to No Ack, transmission of a response frame to the QoS Null frame (e.g., transmission of a response frame by a receiver that has received the QoS Null frame) may not be required. Alternatively, the QoS Null frame may not be transmitted in the form of a data frame and an A-MPDU. The QoS Null frame may be transmitted independently of the data frame. If the QoS Null frame is transmitted independently of the data frame, STA 1-1 may transmit the QoS Null frame first, and may transmit the data frame after a short interframe space (SIFS) or a reduced interframe space (RIFS) after the transmission of the QoS Null frame is completed. A QoS Null frame may be a separate frame from a data frame. In this case, the Ack Policy field included in the QoS Null frame may indicate an Ack policy other than No Ack. If the Ack Policy field is set to an Ack policy other than No Ack, transmission of a response frame to the QoS Null frame (e.g., transmission of a response frame by a receiver that received the QoS Null frame) may be required. Alternatively, even if the QoS Null frame is transmitted independently from a data frame, the Ack Policy field included in the QoS Null frame may be set to No Ack. If the Ack Policy field is set to No Ack, transmission of a response frame to the QoS Null frame may not be required.

The transmission prohibition period may be configured to correspond to the TXOP of STA 1-1. For example, the end time point of the transmission prohibition period may be set to be the same as the end time point of the TXOP. The start time point of the transmission prohibition period may be set to be the same as the start time point of the TXOP. Alternatively, the start time point of the transmission prohibition period may be after a time offset from the start time point of the TXOP. The length of the transmission prohibition period may be set to be less than or equal to the length of the TXOP. STA 1-1 may generate NSTR control information including configuration information of the transmission prohibition period, and may transmit a QoS Null frame including the NSTR control information.

AP 2-1 may receive a QoS Null frame from STA 1-1 and check NSTR control information included in the QoS Null frame. In a detection procedure of a frame (e.g., PPDU) including a QoS Null frame (e.g., MPDU), AP 2-1 may check the length of the PPDU by decoding a preamble, which is a physical layer header of the PPDU. Based on the NSTR control information (e.g., configuration information of a transmission prohibition period), AP 2-2 of AP MLD 2 may configure a transmission prohibition period on the second link. In the transmission prohibition period, AP 2-2 may not transmit a frame to STA 1-2. In other words, AP 2-2 transmitting a frame to STA 1-2 may be prohibited (e.g., restricted) during the transmission prohibition period. It may be possible for AP 2-2 to transmit the frame to an STA other than STA 1-2 during the transmission prohibition period. The transmission prohibition period may be applied from a point in time when AP 2-1 decodes the QoS Null frame of STA 1-1 without error. Alternatively, the transmission prohibition period may start from a point in time indicated by the NSTR control information included in the QoS Null frame (e.g., the start time point of the transmission prohibition period).

Alternatively, AP 1-1 may transmit a frame to STA 1-1 on the first link. The frame (e.g., PPDU) transmitted by AP 1-1 to STA 1-1 may include a QoS Null frame (e.g., MPDU) and a data frame (e.g., MPDU). The RA of the QoS Null frame may be AP 2-1, and the RA of the data frame may be STA 1-1. The Ack Policy field included in the QoS Null frame may indicate No Ack or an Ack policy other than No Ack. The QoS Null frame may include NSTR control information, and the NSTR control information may include configuration information of a transmission prohibition period.

AP 2-1 may obtain a QoS Null frame from AP 1-1 and check the NSTR control information included in the QoS Null frame. In the detection procedure of a frame (e.g., PPDU) including a QoS Null frame (e.g., MPDU), AP 2-2 (or AP 2-1) may check the length of the PPDU by decoding a preamble, which is a physical layer header of the PPDU. Based on the NSTR control information (e.g., configuration information of the transmission prohibition period), AP 2-2 of AP MLD 2 may configure a transmission prohibition period on the second link. In the transmission prohibition period, AP 2-2 may not transmit the frame to STA 1-2. The transmission prohibition period may be applied from the point in time when AP 2-2 (or AP 2-1) decodes the QoS Null frame of STA 1-1 without error. Alternatively, the transmission prohibition period may start from a point in time indicated by the NSTR control information included in the QoS Null frame (e.g., the start time point of the transmission prohibition period).

AP 2-2 of AP MLD 2 may transmit a frame to STA 1-2 according to the reception period of STA 1-1 of STA MLD 1. Based on the PPDU length checked by decoding the PPDU by AP 2-1 of AP MLD 2, AP 2-2 of AP MLD 2 may determine the end time point of the frame transmitted to STA 1-2. The end time point of the frame transmitted by AP 2-2 to STA 1-2 may be set to be the same as the end time point of the PPDU transmitted by AP 1-1 to STA 1-1. AP 2-2 may set the end time point of a frame so that a difference between the end time point of a frame transmitted by AP 2-2 to STA 1-2 and the end time point of a PPDU transmitted by AP 1-1 to STA 1-1 is within 8 us.

In the embodiment of FIG. 4b, if there is a frame (e.g., MPDU, A-MPDU, PPDU, or other data unit) to be transmitted to AP 1-1 on the first link, STA 1-1 of STA MLD 1 may perform a channel access operation on the first link. The channel access operation may be an EDCA-based operation. In other words, the channel access operation may be an EDCA operation. If a backoff counter (e.g., an EDCA backoff counter) reaches 0, STA 1-1 may initiate frame transmission to AP 1-1. "The backoff counter reaching 0" may mean "the backoff operation (e.g., the channel access operation, the EDCA operation) is successful."

STA 1-1 may set TXOP. When the backoff counter reaches 0 and the EDCAF of STA 1-1 determines frame transmission, the TXOP of STA 1-1 may be set. Alternatively, "when transmission of a frame (e.g., initial transmission) is performed and a response frame (e.g., ACK frame, BA frame) to the frame is successfully received", the TXOP may be set. The response frame may mean an ACK frame and/or a BA frame. The frame transmitted by STA 1-1 may have an A-MPDU form. In other words, the frame transmitted by STA 1-1 may include a plurality of MPDUs. The frame transmitted by STA 1-1 may include a first MPDU and a second MPDU. The first MPDU may be a QoS Null frame. The QoS Null frame may not include a body (e.g., a frame body). In other words, the QoS Null frame may be a MAC frame that only contains a MAC header and an FCS field. The QoS Null frame may be transmitted from STA 1-1 to AP 2-1. The second MPDU may be a data frame (e.g., a UL data frame). The data frame may be transmitted from STA 1-1 to AP 1-1.

The QoS Null frame may include NSTR control information. The NSTR control information may include configuration information of a transmission prohibition period. The transmission prohibition period may mean a puncturing period. The configuration information of the transmission prohibition period may include at least one of information on link(s) to which the transmission prohibition period is applied (e.g., link bitmap, link identifier), the length of the transmission prohibition period, the start time point of the transmission prohibition period, the end time point of the transmission prohibition period, or information on a communication node (e.g., an identifier) where the transmission prohibition period is configured (e.g., applied) (e.g., an AP, a STA, an AP MLD, a STA MLD).

NSTR control information may be included in a HT (high throughput) control field of the MAC header of the QoS Null frame in the form of A-control. The Ack policy field included in the QoS Null frame may be set to No Ack. If the Ack policy field is set to No Ack, transmission of a response frame to the QoS Null frame may not be required. Alternatively, the QoS Null frame may not be transmitted in the form of a data frame and an A-MPDU. The QoS Null frame may be transmitted independently of the data frame. If the QoS Null frame is transmitted independently of the data frame, STA 1-1 may transmit the QoS Null frame first, and may transmit the data frame after a short interframe space (SIFS) or a reduced interframe space (RIFS) after the transmission of the QoS Null frame is completed. The QoS Null frame may be a separate frame different from the data frame. In this case, the Ack Policy field included in the QoS Null frame may indicate an Ack policy other than No Ack. If the Ack Policy field is set to an Ack policy other than No Ack, transmission of a response frame to the QoS Null frame may be required. Alternatively, even if the QoS Null frame is transmitted independently of the data frame, the Ack Policy field included in the QoS Null frame may be set to No Ack. If the Ack Policy field is set to No Ack, transmission of a response frame to the QoS Null frame may not be required.

The transmission prohibition period may be configured to correspond to the TXOP of STA 1-1. For example, the end time point of the transmission prohibition period may be set to be the same as the end time point of the TXOP. The start time point of the transmission prohibition period may be set to be the same as the start time point of the TXOP. Alternatively, the start time point of the transmission prohibition period may be after a time offset from the start time point of the TXOP. The length of the transmission prohibition period may be set to be less than or equal to the length of the TXOP. STA 1-1 may generate NSTR control information including configuration information of the transmission prohibition period, and may transmit a QoS Null frame including the NSTR control information.

The QoS Null frame may further include AAR (assisted AP request) control information. The AAR control information may include information (e.g., information elements, fields) for requesting uplink scheduling. The QoS Null frame including NSTR control information and AAR control information may indicate that "a transmission prohibition period is set in the link, and uplink scheduling is requested after the end of the transmission prohibition period in the link." The request for uplink scheduling may be performed (e.g., initiated) by transmission of a trigger frame. The AAR control information may indicate a request for performing a trigger-based transmission procedure (e.g., an uplink OFDMA (orthogonal frequency division multiple access) transmission procedure) after the transmission prohibition period.

AP 2-1 may receive a QoS Null frame from STA 1-1, and may check NSTR control information and AAR control information included in the QoS Null frame. In the detection procedure of a frame (e.g., PPDU) including a QoS Null frame (e.g., MPDU), AP 2-1 may check the length of the PPDU by decoding a preamble, which is a physical layer header of the PPDU. Based on the NSTR control information (e.g., configuration information of the transmission prohibition period), AP 2-2 of AP MLD 2 may configure a transmission prohibition period on the second link. In the transmission prohibition period, AP 2-2 may not transmit a frame to STA 1-2. In other words, AP 2-2 transmitting the frame to STA 1-2 may be prohibited (e.g., restricted) during the transmission prohibition period. It may be possible for AP 2-2 to transmit the frame to an STA other than STA 1-2 during the transmission prohibition period. The transmission prohibition period may be applied from a point in time when AP 2-1 decodes the QoS Null frame of STA 1-1 without error. Alternatively, the transmission prohibition period may start from a point in the time indicated by the NSTR control information included in the QoS Null frame (e.g., the start time point of the transmission prohibition period).

After the transmission prohibition period ends on the second link, AP 2-2 may transmit a trigger frame (e.g., a trigger frame for requesting uplink scheduling) to STA 1-2. Transmission of the trigger frame may be scheduled by AAR control information. Alternatively, based on the PPDU length checked by decoding the preamble of the PPDU, AP 2-2 may transmit the trigger frame in accordance with the transmission period of AP 1-1 of AP MLD 1 after the termination of transmission of STA 1-1. STA 1-2 may receive the trigger frame from AP 2-2 and transmit a data frame (e.g., an UL data frame) to AP 2-2. Transmission of the UL data frame may be triggered by the trigger frame. AP 2-2 may receive the data frame from STA 1-2 and transmit a response frame to the data frame to STA 1-2. AP 2-2 may have acquired a TXOP by transmitting a trigger frame. If there is a remaining TXOP period, AP 2-2 may transmit a trigger frame or a downlink frame to STA 1-2 or another STA.

Alternatively, AP 1-1 may transmit a frame to STA 1-1 on the first link. The frame (e.g., PPDU) transmitted by STA 1-1 to AP 1-1 may include a QoS Null frame (e.g., MPDU) and a data frame (e.g., MPDU). The RA of the QoS Null frame may be AP 2-1, and the RA of the data frame may be STA 1-1. The Ack policy field included in the QoS Null frame may indicate No Ack or an Ack policy other than No Ack. The QoS Null frame may include NSTR control information and AAR control information. The NSTR control information may include configuration information of a transmission prohibition period. The AAR control information may be information for requesting uplink scheduling.

AP 2-1 may receive a QoS Null frame from AP 1-1, and may check the NSTR control information and AAR control information included in the QoS Null frame. In the detection procedure of a frame (e.g., PPDU) including a QoS Null frame (e.g., MPDU), AP 2-1 (or AP 2-2) may check the length of the PPDU by decoding a preamble, which is a physical layer header of the PPDU. Based on the NSTR control information (e.g., configuration information of the transmission prohibition period), AP 2-2 of AP MLD 2 may configure a transmission prohibition period on the second link. In the transmission prohibition period, AP 2-2 may not transmit the frame to STA 1-2. The transmission prohibition period may be applied from a point in time when AP 2-2 decodes the QoS Null frame of STA 1-1 without error. Alternatively, the transmission prohibition period may start from a point in time indicated by the NSTR control information included in in the QoS Null frame (e.g., the start time point of the transmission prohibition period).

After the transmission prohibition period ends on the second link, AP 2-2 may transmit a trigger frame (e.g., a trigger frame for requesting uplink scheduling) to STA 1-2. Transmission of the trigger frame may be scheduled by AAR control information. If the channel access procedure of AP 2-2 is successful, the trigger frame may be transmitted. STA 1-2 may receive the trigger frame from AP 2-2 and transmit a data frame (e.g., an UL data frame) to AP 2-2. Transmission of the UL data frame may be triggered by the trigger frame. AP 2-2 may receive the data frame from STA 1-2 and transmit a response frame to the data frame to STA 1-2. AP 2-2 may have obtained a TXOP by transmitting the trigger frame. If there is a remaining TXOP period, AP 2-2 may transmit a trigger frame or a downlink frame to STA 1-2 or another STA.

Alternatively, AP 2-2 of AP MLD 2 may transmit a frame to STA 1-2 according to the reception period of STA 1-1 of STA MLD 1. Based on the PPDU length checked by decoding the PPDU by AP 2-1 of AP MLD 2, AP 2-2 of AP MLD 2 may determine the end time point of the frame transmitted to STA 1-2. The end time point of the frame transmitted by AP 2-2 to STA 1-2 may be set to be the same as the end time point of the PPDU transmitted by AP 1-1 to STA 1-1. AP 2-2 may set the end time point of the frame so that a difference between the end time point of the frame transmitted by AP 2-2 to STA 1-2 and the end time point of the PPDU transmitted by AP 1-1 to STA 1-1 is within 8 us. AP 2-2 may receive a response frame to the frame from STA 1-2, and transmit a trigger frame to STA 1-2 after performing a channel contention procedure (e.g., a channel access procedure). STA 1-2 may receive the trigger frame from AP 2-2, and transmit a data frame (e.g., a UL data frame) to AP 2-2. AP 2-2 may receive a data frame from STA 1-2, and transmit a response frame to the data frame to STA 1-2. AP 2-2 may have obtained a TXOP by transmitting the trigger frame. If there is a remaining TXOP period, AP 2-2 may transmit a trigger frame or downlink frame to STA 1-2 or another STA.

If the QoS Null frame includes AAR control information, AP 2-2 may transmit a trigger frame. In other words, the QoS Null frame including AAR control information may request "triggering of uplink transmission by a trigger frame." AP 2-2 may transmit a trigger frame based on the request.

The QoS Null frame may be a type of QoS data frame. The QoS Null frame may be a frame without a frame body in the QoS data frame. The A-Control field of the QoS data frame may include NSTR control information and/or AAR control information. Alternatively, at least one of the NSTR control information or the AAR control information may be included in the QoS Null frame or another frame in the form of an information element (e.g., an element).

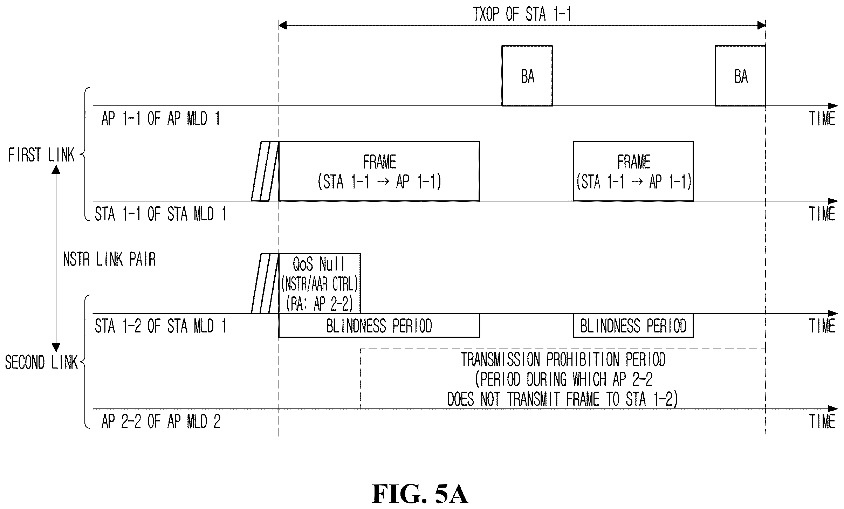

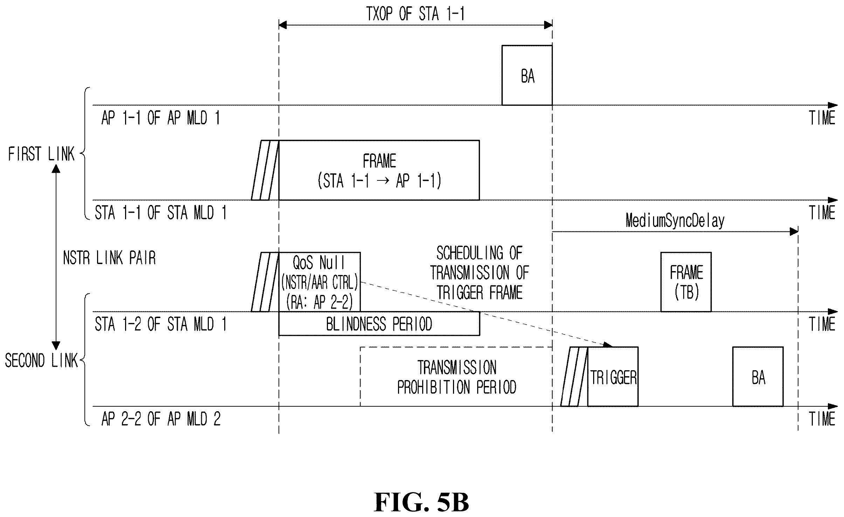

FIGS. 5a and 5b are timing diagrams illustrating embodiments of multi-link communication.

Referring to FIGS. 5a and 5b, STA MLD 1 may operate in multiple links. STA MLD 1 may access (e.g., associate) one or more AP MLDs. For example, STA MLD 1 may be simultaneously associated with AP MLD 1 and AP MLD 2. AP MLD 1 may be a primary AP MLD, and AP MLD 2 may be a secondary AP MLD. STA MLD 1 may perform an association procedure with each of AP MLD 1 and AP MLD 2. In the association procedure, STA MLD 1 may transmit a frame including capability information of the STA MLD 1 (e.g., a probe request frame, an association request frame, etc.) to AP MLD 1 and/or AP MLD 2. The capability information may include at least one of information indicating whether STA MLD 1 supports STR operation, information indicating whether STA MLD 1 supports EMLSR operation, information indicating whether STA MLD 1 supports joint transmission by multiple APs, or information indicating whether STA MLD 1 supports preemption operation. AP MLD 1 and AP MLD 2 may be connected via a backhaul link. A frame exchange procedure between AP MLD 1 and AP MLD 2 may be performed via the backhaul link. AP MLD 1 and AP MLD 2 may transmit frames to STA MLD based on a coordination transmission scheme (e.g., a joint transmission scheme).

AP MLD 1 and AP MLD 2 may include separate MAC layer element(s) (e.g., an upper MAC sublayer, a lower MAC sublayer, and/or an MLME). A MAC layer element may mean a MAC layer entity. At least one of the MAC layer element(s) of AP MLD 1 and AP MLD 2 may be an integrated element (e.g., an interlocked element, a linked element). The integrated element may be commonly included in AP MLD 1 and AP MLD 2. For example, AP MLD 1 and AP MLD 2 may include an integrated upper MAC sublayer. AP MLD 1 and AP MLD 2 may not include an integrated lower MAC sublayer.

AP MLD 1 and AP MLD 2 may assign (e.g., allocate, set) separate AIDs to STA MLD 1. For example, AP MLD 1 may assign AID 1111 to STA MLD 1. AP MLD 2 may assign AID 2222 to STA MLD 1. In other words, the AID assigned by AP MLD 1 to STA MLD 1 may be 1111, and the AID assigned by AP MLD 2 to STA MLD 1 may be 2222. Alternatively, AP MLD 1 and AP MLD 2 may manage the same AID for STA MLD 1. For example, AP MLD 1 and AP MLD 2 may assign AID 1111 to STA MLD 1, and the common AID for STA MLD 1 may be 1111. STA MLD 1 may be identified and/or managed by the common AID (e.g., 1111).

Each of the AP MLD and the STA MLD may operate in multiple links. The multiple links may include a first link and a second link. An STA associated with STA MLD 1 (e.g., non-AP MLD) operating on the first link may be referred to as STA 1-1, and an STA associated with STA MLD 1 operating on the second link may be referred to as STA 1-2. STA 1-1 and STA 1-2 may be associated with STA MLD 1. An STA associated with STA MLD 1 operating in the x-th link may be referred to as STA 1-x. x may be a natural number. An AP associated with AP MLD 1 operating on the first link may be referred to as AP 1-1, and an AP associated with AP MLD 1 operating on the second link may be referred to as AP 1-2. AP 1-1 and AP 1-2 may be associated with AP MLD 1. An AP associated with AP MLD 1 operating in the x-th link may be referred to as AP 1-x. An AP associated with AP MLD 2 operating on the first link may be referred to as AP 2-1, and an AP associated with AP MLD 2 operating on the second link may be referred to as AP 2-2. AP 2-1 and AP 2-2 may be associated with AP MLD 2. An AP associated with AP MLD 2 operating in the x-th link may be referred to as AP 2-x.

AP MLD 1 and AP MLD 2 may have at least one common link (e.g., common frequency, common operating frequency). For example, AP MLD 1 and AP MLD 2 may operate on a first link. Even if the operating frequencies (e.g., links) of AP MLD 1 and AP MLD 2 are the same, the link IDs (e.g., frequency identifiers) managed by AP MLD 1 and AP MLD 2 may be different. When AP MLD 1 and AP MLD 2 operate on the first link, the link ID managed by AP MLD 1 may be different from the link ID managed by AP MLD 2. "When the AP MLDs have different link IDs and the operating frequencies corresponding to the different link IDs are the same", the different link IDs may indicate the same link. Alternatively, AP MLD 1 and AP MLD 2 may not have a common link.

The operating links (e.g., operating frequency) of STA MLD 1 may include a first link and a second link. The first link and the second link may be an NSTR link pair for STA MLD 1. In the NSTR link pair, STA MLD 1 may not perform the STR operation. Additionally, STA MLD 1 may perform an EMLSR operation on the first link and the second link. The first link and the second link may be EMLSR links. In other words, when STA MLD 1 performs the EMLSR operation on the first link and the second link, the first link and the second link may be an NSTR link pair and an EMLSR link. AP MLD 1 may operate on the first link. AP MLD 2 may operate on the second link. STA MLD 1 may communicate with AP MLD 1 on the first link, and STA MLD 1 may communicate with AP MLD 2 on the second link.

In the embodiment of FIG. 5a, if there is a frame (e.g., MPDU, A-MPDU, PPDU, or other data unit) to be transmitted to AP 1-1 on the first link, STA 1-1 of STA MLD 1 may perform a channel access operation on the first link. The channel access operation may be an EDCA-based operation. In other words, the channel access operation may be an EDCA operation. If a backoff counter (e.g., an EDCA backoff counter) reaches 0, STA 1-1 may initiate frame transmission to AP 1-1. "The backoff counter reaching 0" may mean "the backoff operation (e.g., the channel access operation, the EDCA operation) is successful."

STA 1-1 may set a TXOP. When the backoff counter reaches 0 and the EDCAF of STA 1-1 determines frame transmission, the TXOP of STA 1-1 may be set. Alternatively, "when transmission of a frame (e.g., initial transmission) is performed and a response frame (e.g., ACK frame, BA frame) to the frame is successfully received", the TXOP may be set. The response frame may mean an ACK frame and/or a BA frame. STA 1-1 and STA 1-2 may transmit QoS Null frames to AP 2-2. The QoS Null frames may be transmitted simultaneously from STA 1-1 and STA 1-2. In other words, STA 1-1 and STA 1-2 may transmit the QoS Null frames to AP 2-2 based on a synchronous transmission method. When a synchronous transmission method is used, the transmission start time point and/or transmission end time point of the QoS Null frame on the first link may be the same as the transmission start time point and/or transmission end time point of the QoS Null frame on the second link. Alternatively, STA 1-1 may transmit a frame (e.g., a data frame) to AP 1-1 without transmitting a QoS Null frame, and STA 1-2 may transmit a QoS Null frame to AP 2-2. The frame of STA 1-1 and the QoS Null frame of STA 1-2 may be transmitted based on a synchronous transmission method. The lengths of the data frame of STA 1-1 and the QoS Null frame of STA 1-2 may be different. Therefore, even if the frame is transmitted based on a synchronous transmission method, the transmission end times of the frame in STA 1-1 and STA 1-2 may be different. For example, the transmission start time point of the data frame of STA 1-1 and the QoS Null frame of STA 1-2 may be the same, but the transmission end time point of the data frame of STA 1-1 and the QoS Null frame of STA 1-2 may be different.

The QoS Null frame may include NSTR control information. The NSTR control information may include configuration information of a transmission prohibition period. The transmission prohibition period may mean a puncturing period. The configuration information of the transmission prohibition period may include at least one of information on link(s) to which the transmission prohibition period is applied (e.g., link bitmap, link identifier), the length of the transmission prohibition period, the start time point of the transmission prohibition period, the end time point of the transmission prohibition period, or information on a communication node (e.g., AP, STA, AP MLD, STA MLD) where the transmission prohibition period is configured (e.g., applied) (e.g., identifier).

The NSTR control information may be included in a HT (high throughput) control field of the MAC header of the QoS Null frame in the form of A-control. The Ack policy field included in the QoS Null frame may be set to No Ack. If the Ack policy field is set to No Ack, transmission of a response frame to the QoS Null frame may not be required.

The transmission prohibition period may be configured to correspond to the TXOP of STA 1-1. For example, the end time point of the transmission prohibition period may be set to be the same as the end time point of the TXOP. The start time point of the transmission prohibition period may be set to be the same as the start time point of the TXOP. Alternatively, the start time point of the transmission prohibition period may be after a time offset from the start time point of the TXOP. The length of the transmission prohibition period may be set to be less than or equal to the length of the TXOP. STA 1-1 and/or STA 1-2 may generate NSTR control information including configuration information of the transmission prohibition period, and may transmit a QoS Null frame including the NSTR control information.

When the QoS Null frame is transmitted on the first link and the second link, AP 2-1 may receive the QoS Null frame from STA 1-1, and AP 2-2 may receive the QoS Null frame from STA 1-2. When the QoS Null frame is transmitted on the second link, AP 2-2 may receive the QoS Null frame from STA 1-2. AP 2-1 and/or AP 2-2 may check NSTR control information included in the QoS Null frame. Based on the NSTR control information (e.g., configuration information of a transmission prohibition period), AP 2-2 of AP MLD 2 may configure a transmission prohibition period on the second link. In the transmission prohibition period, AP 2-2 may not transmit a frame to STA 1-2. In other words, AP 2-2 transmitting the frame to STA 1-2 may be prohibited (e.g., restricted) during the transmission prohibition period. It may be possible for AP 2-2 to transmit the frame to an STA other than STA 1-2 during the transmission prohibition period. The transmission prohibition period may be applied from "the point in time when AP 2-1 decodes the QoS Null frame of STA 1-1 without error" and/or "the point in time when AP 2-2 decodes the QoS Null frame of STA 1-2 without error." Alternatively, the transmission prohibition period may start from the point in time indicated by the NSTR control information included in the QoS Null frame (e.g., the start time point of the transmission prohibition period).

In the embodiment of FIG. 5b, if there is a frame (e.g., MPDU, A-MPDU, PPDU, or other data unit) to be transmitted to AP 1-1 on the first link, STA 1-1 of STA MLD 1 may perform a channel access operation on the first link. The channel access operation may be an EDCA-based operation. In other words, the channel access operation may be an EDCA operation. If a backoff counter (e.g., an EDCA backoff counter) reaches 0, STA 1-1 may initiate frame transmission to AP 1-1. "The backoff counter reaching 0" may mean "the backoff operation (e.g., the channel access operation, the EDCA operation) is successful."

STA 1-1 may set a TXOP. When the backoff counter reaches 0 and the EDCAF of STA 1-1 determines frame transmission, the TXOP of STA 1-1 may be set. Alternatively, "when transmission of a frame (e.g., initial transmission) is performed and a response frame (e.g., ACK frame, BA frame) to the frame is successfully received", the TXOP may be set. The response frame may mean an ACK frame and/or a BA frame. STA 1-1 and STA 1-2 may transmit QoS Null frames to AP 2-1 and AP 2-2, respectively. The QoS Null frames may be transmitted simultaneously from STA 1-1 and STA 1-2. In other words, STA 1-1 and STA 1-2 may transmit QoS Null frames to AP 2-1 and AP 2-2 based on a synchronous transmission scheme. When a synchronous transmission scheme is used, the transmission start time point and/or transmission end time point of the QoS Null frame on the first link may be the same as the transmission start time point and/or transmission end time point of the QoS Null frame on the second link. Alternatively, STA 1-1 may transmit a frame (e.g., a data frame) to AP 1-1 without transmitting a QoS Null frame, and STA 1-2 may transmit a QoS Null frame to AP 2-2. The frame of STA 1-1 and the QoS Null frame of STA 1-2 may be transmitted based on a synchronous transmission scheme. The lengths of the data frame of STA 1-1 and the QoS Null frame of STA 1-2 may be different. Therefore, even if the frame is transmitted based on the synchronous transmission method, the transmission end time point of the frame in STA 1-1 and STA 1-2 may be different. For example, the transmission start time point of the data frame of STA 1-1 and the QoS Null frame of STA 1-2 may be the same, but the transmission end time point of the data frame of STA 1-1 and the QoS Null frame of STA 1-2 may be different.

The QoS Null frame may include NSTR control information. The NSTR control information may include configuration information of a transmission prohibition period. The transmission prohibition period may mean a puncturing period. The configuration information of the transmission prohibition period may include at least one of information on link(s) to which the transmission prohibition period is applied (e.g., link bitmap, link identifier), the length of the transmission prohibition period, the start time point of the transmission prohibition period, the end time point of the transmission prohibition period, or information (e.g., identifier) of a communication node (e.g., AP, STA, AP MLD, STA MLD) where the transmission prohibition period is configured (e.g., applied). The transmission prohibition period may be a period including "a transmission period of a frame of STA 1-1 of STA MLD 1 on the first link" and/or "a transmission period of a response frame of AP 1-1 of AP MLD 1 to a frame of STA 1-1 of STA MLD 1 on the first link." The transmission prohibition period may be the TXOP of STA 1-1.

The NSTR control information may be included in a HT (high throughput) control field of the MAC header of the QoS Null frame in the form of an A-control. The Ack policy field included in the QoS Null frame may be set to No Ack. If the Ack policy field is set to No Ack, transmission of a response frame to the QoS Null frame may not be required.

The QoS Null frame may further include AAR control information. The AAR control information may include information (e.g., information elements, fields) for requesting uplink scheduling. The QoS Null frame including NSTR control information and AAR control information may indicate that "a transmission prohibition period is configured in the link, and uplink scheduling is requested after the end of the transmission prohibition period in the link." The request for uplink scheduling may be performed (e.g., initiated) by transmission of a trigger frame. The AAR control information may indicate a request for performing a trigger-based transmission procedure (e.g., an uplink (UL) OFDMA (orthogonal frequency division multiple access) transmission procedure) after the transmission prohibition period.

When the QoS Null frame is transmitted on the first link and the second link, AP 2-1 may receive the QoS Null frame from STA 1-1, and AP 2-2 may receive the QoS Null frame from STA 1-2. When the QoS Null frame is transmitted on the second link, AP 2-2 may receive the QoS Null frame from STA 1-2. AP 2-1 and/or AP 2-2 may check NSTR control information and AAR control information included in the QoS Null frame. Based on the NSTR control information (e.g., configuration information of the transmission prohibition period), AP 2-2 of AP MLD 2 may configure a transmission prohibition period on the second link. In the transmission prohibition period, AP 2-2 may not transmit a frame to STA 1-2. In other words, AP 2-2 transmitting the frame to STA 1-2 may be prohibited (e.g., restricted) during the transmission prohibition period. It may be possible for AP 2-2 to transmit the frame to an STA other than STA 1-2 during the transmission prohibition period. The transmission prohibition period may be applied from "the point in time when AP 2-1 decodes the QoS Null frame of STA 1-1 without error" and/or "the point in time when AP 2-2 decodes the QoS Null frame of STA 1-2 without error." Alternatively, the transmission prohibition period may start from the point in time indicated by the NSTR control information included in the QoS Null frame (e.g., the start time point of the transmission prohibition period).

After the transmission prohibition period ends on the second link, AP 2-2 may transmit a trigger frame (e.g., a trigger frame for requesting uplink scheduling) to STA 1-2. Transmission of the trigger frame may be scheduled by AAR control information. The trigger frame may be transmitted after a channel access procedure of AP 2-2 is successful. STA 1-2 may receive the trigger frame from AP 2-2 and transmit a data frame (e.g., an UL data frame) to AP 2-2. Transmission of the UL data frame may be triggered by the trigger frame. AP 2-2 may receive the data frame from STA 1-2 and transmit a response frame to the data frame to STA 1-2. AP 2-2 may have obtained a TXOP by transmitting the trigger frame. If there is a remaining TXOP period, AP 2-2 may transmit a trigger frame or downlink frame to STA 1-2 or another STA.

A QoS Null frame may be a type of QoS data frame. A QoS Null frame may be a frame without a frame body in the QoS data frame. The A-Control field of the QoS data frame may include NSTR control information and/or AAR control information. Alternatively, at least one of the NSTR control information or the AAR control information may be included in the QoS Null frame or another frame in the form of an information element (e.g., an element).

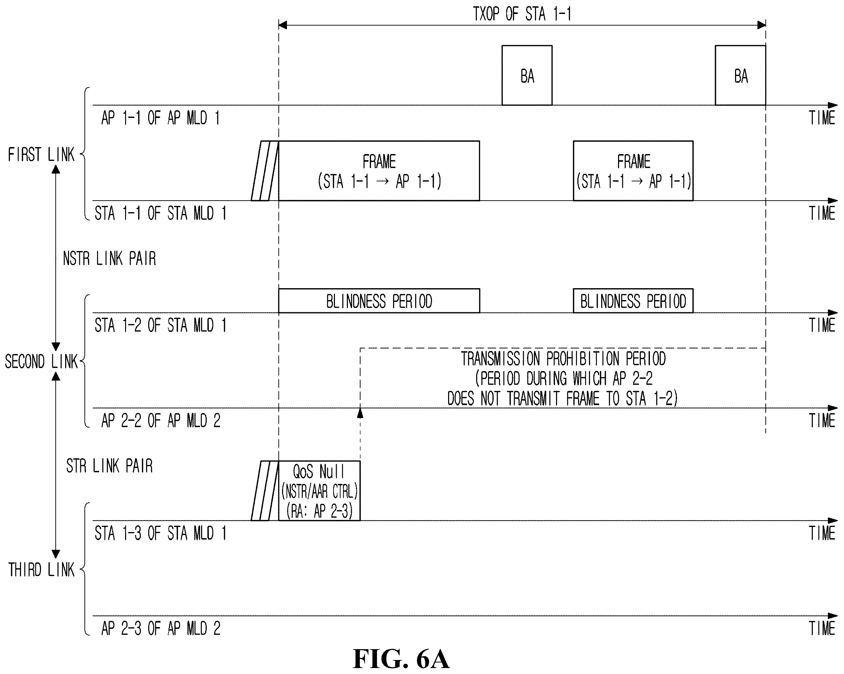

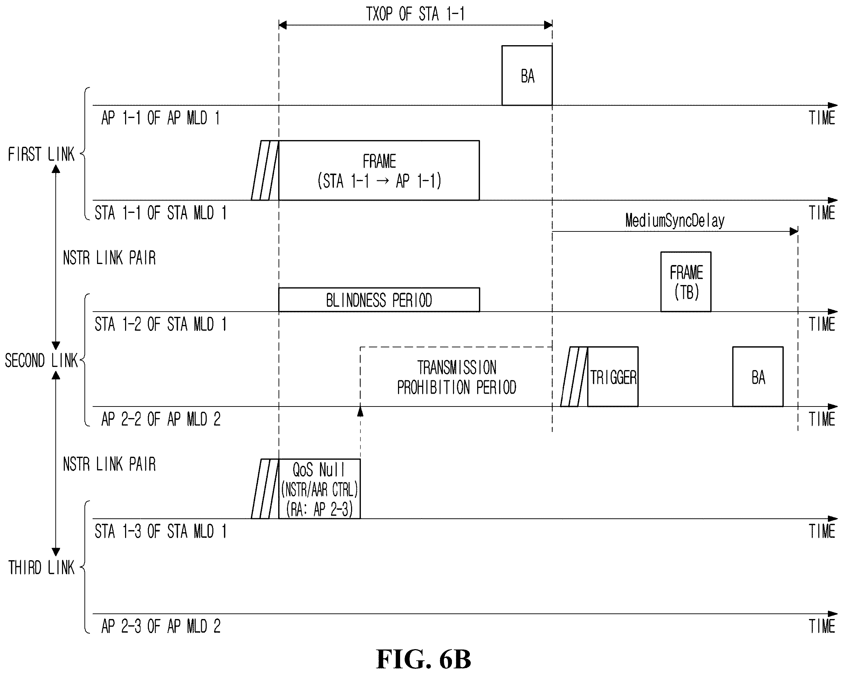

FIGS. 6a and 6b are timing diagrams illustrating embodiments of multi-link communication.

Referring to FIGS. 6a and 6b, STA MLD 1 may operate in multiple links. STA MLD 1 may access (e.g., associate) one or more AP MLDs. For example, STA MLD 1 may be simultaneously associated with AP MLD 1 and AP MLD 2. AP MLD 1 may be a primary AP MLD, and AP MLD 2 may be a secondary AP MLD. STA MLD 1 may perform an association procedure with each of AP MLD 1 and AP MLD 2. In the association procedure, STA MLD 1 may transmit a frame including capability information of the STA MLD 1 (e.g., a probe request frame, an association request frame, etc.) to AP MLD 1 and/or AP MLD 2. The capability information may include at least one of information indicating whether STA MLD 1 supports STR operation, information indicating whether STA MLD 1 supports EMLSR operation, information indicating whether STA MLD 1 supports joint transmission by multiple APs, or information indicating whether STA MLD 1 supports preemption operation. AP MLD 1 and AP MLD 2 may be connected via a backhaul link. A frame exchange procedure between AP MLD 1 and AP MLD 2 may be performed via the backhaul link. AP MLD 1 and AP MLD 2 may transmit frames to STA MLD based on a coordination transmission scheme (e.g., a joint transmission scheme).

AP MLD 1 and AP MLD 2 may include separate MAC layer element(s) (e.g., an upper MAC sublayer, a lower MAC sublayer, and/or an MLME). A MAC layer element may mean a MAC layer entity. At least one of the MAC layer element(s) of AP MLD 1 and AP MLD 2 may be an integrated element (e.g., an interlocked element, a linked element). The integrated element may be commonly included in AP MLD 1 and AP MLD 2. For example, AP MLD 1 and AP MLD 2 may include an integrated upper MAC sublayer. AP MLD 1 and AP MLD 2 may not include an integrated lower MAC sublayer.

AP MLD 1 and AP MLD 2 may assign (e.g., allocate, set) separate AIDs to STA MLD 1. For example, AP MLD 1 may assign AID 1111 to STA MLD 1. AP MLD 2 may assign AID 2222 to STA MLD 1. In other words, the AID assigned by AP MLD 1 to STA MLD 1 may be 1111, and the AID assigned by AP MLD 2 to STA MLD 1 may be 2222. Alternatively, AP MLD 1 and AP MLD 2 may manage the same AID for STA MLD 1. For example, AP MLD 1 and AP MLD 2 may assign AID 1111 to STA MLD 1, and the common AID for STA MLD 1 may be 1111. STA MLD 1 may be identified and/or managed by a common AID (e.g., 1111).

Each of the AP MLD and the STA MLD may operate in multiple links. The multiple links may include a first link and a second link. An STA associated with STA MLD 1 (e.g., non-AP MLD) operating on the first link may be referred to as STA 1-1, and an STA associated with STA MLD 1 operating on the second link may be referred to as STA 1-2. STA 1-1 and STA 1-2 may be associated with STA MLD 1. An STA associated with STA MLD 1 operating in the x-th link may be referred to as STA 1-x. x may be a natural number. An AP associated with AP MLD 1 operating on the first link may be referred to as AP 1-1, and an AP associated with AP MLD 1 operating on the second link may be referred to as AP 1-2. AP 1-1 and AP 1-2 may be associated with AP MLD 1. An AP associated with AP MLD 1 operating in the x-th link may be referred to as AP 1-x. An AP associated with AP MLD 2 operating on the first link may be referred to as AP 2-1, and an AP associated with AP MLD 2 operating on the second link may be referred to as AP 2-2. AP 2-1 and AP 2-2 may be associated with AP MLD 2. An AP associated with AP MLD 2 operating in the x-th link may be referred to as AP 2-x.

AP MLD 1 and AP MLD 2 may have at least one common link (e.g., common frequency, common operating frequency). For example, AP MLD 1 and AP MLD 2 may operate on a first link. Even if the operating frequencies (e.g., links) of AP MLD 1 and AP MLD 2 are the same, the link IDs (e.g., frequency identifiers) managed by AP MLD 1 and AP MLD 2 may be different. When AP MLD 1 and AP MLD 2 operate on the first link, the link ID managed by AP MLD 1 may be different from the link ID managed by AP MLD 2. "When the AP MLDs have different link IDs and the operating frequencies corresponding to the different link IDs are the same", the different link IDs may indicate the same link. Alternatively, AP MLD 1 and AP MLD 2 may not have a common link.

The operating links (e.g., operating frequency) of STA MLD 1 may include a first link and a second link. The first link and the second link may be an NSTR link pair for STA MLD 1. In the NSTR link pair, STA MLD 1 may not perform the STR operation. Additionally, STA MLD 1 may perform an EMLSR operation on the first link and the second link. The first link and the second link may be EMLSR links. In other words, when STA MLD 1 performs the EMLSR operation on the first link and the second link, the first link and the second link may be an NSTR link pair and an EMLSR link. AP MLD 1 may operate on the first link. AP MLD 2 may operate on the second link. STA MLD 1 may communicate with AP MLD 1 on the first link and with AP MLD 2 on the second link. The links in which STA MLD 1, AP MLD 1, and/or AP MLD 2 operate may further include a third link. Each of STA MLD 1, AP MLD 1, and AP MLD 2 may operate on the first link, the second link, and/or the third link. The third link and the first link may be an STR link pair. In this case, an STR operation may be performed in the third link and the first link. The third link and the second link may be an STR link pair. In this case, an STR operation may be performed in the third link and the second link, and simultaneous transmission and reception of frames may be possible. When STA MLD 1 performs the EMLSR operation, the first link and the second link are EMLSR links, but the third link may not be an EMLSR link. AP MLD 2 may operate in the third link. Communication between STA MLD 1 and AP MLD 2 may be performed in the third link.

In the embodiment of FIG. 6a, if there is a frame (e.g., MPDU, A-MPDU, PPDU, or other data unit) to be transmitted to AP 1-1 on the first link, STA 1-1 of STA MLD 1 may perform a channel access operation on the first link. The channel access operation may be an EDCA-based operation. In other words, the channel access operation may be an EDCA operation. If a backoff counter (e.g., an EDCA backoff counter) reaches 0, STA 1-1 may initiate frame transmission to AP 1-1. "The backoff counter reaching 0" may mean "the backoff operation (e.g., the channel access operation, the EDCA operation) is successful."

STA 1-1 may set a TXOP. When the backoff counter reaches 0 and the EDCAF of STA 1-1 determines frame transmission, the TXOP of STA 1-1 may be set. Alternatively, "when transmission of a frame (e.g., initial transmission) is performed and a response frame (e.g., ACK frame, BA frame) to the frame is successfully received", the TXOP may be set. The response frame may mean an ACK frame and/or a BA frame.

While STA 1-1 transmits a frame or before STA 1-1 transmits a frame, STA 1-3 of STA MLD 1 may transmit a QoS Null frame to AP 2-3. The QoS Null frame may include NSTR control information. The NSTR control information may include configuration information of a transmission prohibition period. The transmission prohibition period may mean a puncturing period. The configuration information of the transmission prohibition period may include at least one of information on link(s) to which the transmission prohibition period is applied (e.g., link bitmap, link identifier), the length of the transmission prohibition period, the start time point of the transmission prohibition period, the end time point of the transmission prohibition period, or information on a communication node (e.g., AP, STA, AP MLD, STA MLD) in which the transmission prohibition period is set (e.g., applied) (e.g., identifier).

The NSTR control information may be included in a HT (high throughput) control field of the MAC header of the QoS Null frame in the form of an A-control. The Ack policy field included in the QoS Null frame may be set to No Ack. If the Ack policy field is set to No Ack, transmission of a response frame to the QoS Null frame may not be required. Alternatively, the Ack policy field included in the QoS Null frame may indicate an Ack policy other than No Ack. If the Ack policy field is set to an Ack policy other than No Ack, transmission of a response frame to the QoS Null frame may be required.

The transmission prohibition period may be configured to correspond to the TXOP of STA 1-1. For example, the end time point of the transmission prohibition period may be set to be the same as the end time point of the TXOP. The start time point of the transmission prohibition period may be set to be the same as the start time point of the TXOP. Alternatively, the start time point of the transmission prohibition period may be after a time offset from the start time point of the TXOP. The length of the transmission prohibition period may be set to be less than or equal to the length of the TXOP.

AP 2-3 may receive the QoS Null frame from STA 1-3 and check NSTR control information included in the QoS Null frame. Based on the NSTR control information (e.g., configuration information of transmission prohibition period), AP 2-2 of AP MLD 2 may configure transmission prohibition period on the second link. In the transmission prohibition period, AP 2-2 may not transmit a frame to STA 1-2. In other words, AP 2-2 transmitting the frame to STA 1-2 may be prohibited (e.g., restricted) during the transmission prohibition period. It may be possible for AP 2-2 to transmit the frame to an STA other than STA 1-2 during the transmission prohibition period. The transmission prohibition period may be applied from the point in time when AP 2-3 decodes the QoS Null frame of STA 1-3 without error. Alternatively, the transmission prohibition period may start from a point in time indicated by the NSTR control information included in the QoS Null frame of STA 1-3 (e.g., the start time point of the transmission prohibition period).

Alternatively, AP 1-1 may transmit a frame to STA 1-1 on the first link. STA 1-3 may transmit a QoS Null frame including NSTR control information to AP 2-3. The NSTR control information of STA 1-3 may include configuration information of a transmission prohibition period. The transmission prohibition period may be configured to correspond to the TXOP of AP 1-1. AP 2-3 may receive the QoS Null frame from STA 1-3 and check the NSTR control information included in the QoS Null frame. Based on the NSTR control information (e.g., configuration information of the transmission prohibition period), AP 2-2 of AP MLD 2 may configure a transmission prohibition period on the second link. In the transmission prohibition period, AP 2-2 may not transmit a frame to STA 1-2. The transmission prohibition period may be applied from the point in time when AP 2-3 decodes the QoS Null frame of STA 1-3 without error. Alternatively, the transmission prohibition period may start from a point in time indicated by the NSTR control information included in the QoS Null frame of STA 1-3 (e.g., the start time point of the transmission prohibition period).

In the embodiment of FIG. 6b, if there is a frame (e.g., MPDU, A-MPDU, PPDU, or other data unit) to be transmitted to AP 1-1 on the first link, STA 1-1 of STA MLD 1 may perform a channel access operation on the first link. The channel access operation may be an EDCA-based operation. In other words, the channel access operation may be an EDCA operation. If a backoff counter (e.g., an EDCA backoff counter) reaches 0, STA 1-1 may initiate frame transmission to AP 1-1. "The backoff counter reaching 0" may mean "the backoff operation (e.g., the channel access operation, the EDCA operation) is successful."

STA 1-1 may set a TXOP. When the backoff counter reaches 0 and the EDCAF of STA 1-1 determines frame transmission, the TXOP of STA 1-1 may be set. Alternatively, "when transmission of a frame (e.g., initial transmission) is performed and a response frame (e.g., ACK frame, BA frame) to the frame is successfully received", the TXOP may be set. The response frame may mean an ACK frame and/or a BA frame.

During transmission of STA 1-1 or before transmission of STA 1-1, STA 1-3 of STA MLD 1 may transmit a QoS Null frame to AP 2-3. The QoS Null frame may include NSTR control information. The NSTR control information may include configuration information of a transmission prohibition period. The transmission prohibition period may mean a puncturing period. The configuration information of the transmission prohibition period may include at least one of information on link(s) to which the transmission prohibition period is applied (e.g., link bitmap, link identifier), length of the transmission prohibition period, start time point of the transmission prohibition period, end time point of the transmission prohibition period, or information on a communication node (e.g., AP, STA, AP MLD, STA MLD) where the transmission prohibition period is configured (e.g., applied) (e.g., identifier).

The NSTR control information may be included in a HT (high throughput) control field of the MAC header of the QoS Null frame in the form of an A-control. The Ack policy field included in the QoS Null frame may be set to No Ack. If the Ack policy field is set to No Ack, transmission of a response frame to the QoS Null frame may not be required. Alternatively, the Ack policy field included in the QoS Null frame may indicate an Ack policy other than No Ack. If the Ack policy field is set to an Ack policy other than No Ack, transmission of a response frame to the QoS Null frame may be required.

The transmission prohibition period may be configured to correspond to the TXOP of STA 1-1. For example, the end time point of the transmission prohibition period can be set to be the same as the end time point of the TXOP. The start time point of the transmission prohibition period may be set to be the same as the start time point of the TXOP. Alternatively, the start time point of the transmission prohibition period may be after a time offset from the start time point of the TXOP. The length of the transmission prohibition period may be set to be less than or equal to the length of the TXOP.

The transmission prohibition period may be a period including "a transmission period of a frame (e.g., a UL frame) of STA 1-1 of STA MLD 1 on the first link" and/or "a transmission period of a response frame of AP 1-1 of AP MLD 1 to a frame of STA 1-1 of STA MLD 1 on the first link." The transmission prohibition period may be a TXOP of STA 1-1.

The QoS Null frame may further include AAR control information. The AAR control information may include information (e.g., information elements, fields) for requesting uplink scheduling. The QoS Null frame including NSTR control information and AAR control information may indicate that "a transmission prohibition period is configured in the link, and uplink scheduling is requested after the end of the transmission prohibition period in the link." The request for uplink scheduling may be performed (e.g., initiated) by transmission of a trigger frame. The AAR control information may indicate a request for performing a trigger-based transmission procedure (e.g., an uplink (UL) OFDMA (orthogonal frequency division multiple access) transmission procedure) after the transmission prohibition period.

AP 2-3 may receive a QoS Null frame from STA 1-3, and check NSTR control information and AAR control information included in the QoS Null frame. Based on the NSTR control information (e.g., configuration information of transmission prohibition period), AP 2-2 of AP MLD 2 may configure a transmission prohibition period on the second link. In the transmission prohibition period, AP 2-2 may not transmit a frame to STA 1-2. In other words, AP 2-2 transmitting the frame to STA 1-2 may be prohibited (e.g., restricted) during the transmission prohibition period. It may be possible for AP 2-2 to transmit the frame to an STA other than STA 1-2 during the transmission prohibition period. The transmission prohibition period may be applied from the point in time when AP 2-1 decodes the QoS Null frame of STA 1-3 without error. Alternatively, the transmission prohibition period may start from a point in time indicated by the NSTR control information included in the QoS Null frame of STA 1-3 (e.g., the start time point of the transmission prohibition period).

After the transmission prohibition period ends on the second link, AP 2-2 may transmit a trigger frame (e.g., a trigger frame for requesting uplink scheduling) to STA 1-2. Transmission of the trigger frame may be scheduled by AAR control information. The trigger frame may be transmitted after a channel access procedure of AP 2-2 is successful. STA 1-2 may receive the trigger frame from AP 2-2 and transmit a data frame (e.g., an UL data frame) to AP 2-2. Transmission of the UL data frame may be triggered by the trigger frame. AP 2-2 may receive the data frame from STA 1-2 and transmit a response frame to the data frame to STA 1-2. AP 2-2 may have obtained a TXOP by transmitting the trigger frame. If there is a remaining TXOP period, AP 2-2 may transmit a trigger frame or downlink frame to STA 1-2 or another STA.

Alternatively, AP 1-1 may transmit a frame to STA 1-1 on the first link. STA 1-3 may transmit a QoS Null frame including NSTR control information and AAR control information to AP 2-3. The NSTR control information of STA 1-3 may include configuration information of a transmission prohibition period. The transmission prohibition period may be configured to correspond to the TXOP of AP 1-1. AP 2-3 may receive the QoS Null frame from STA 1-3 and check the NSTR control information and AAR control information included in the QoS Null frame. Based on the NSTR control information (e.g., configuration information of the transmission prohibition period), AP 2-2 of AP MLD 2 may configure a transmission prohibition period on the second link. In the transmission prohibition period, AP 2-2 may not transmit the frame to STA 1-2. The transmission prohibition period may be applied from the point in time when AP 2-3 decodes the QoS Null frame of STA 1-3 without error. Alternatively, the transmission prohibition period may start from the time indicated by the NSTR control information included in the QoS Null frame of STA 1-3 (e.g., the start time point of the transmission prohibition period).

After the transmission prohibition period ends on the second link, AP 2-2 may transmit a trigger frame (e.g., a trigger frame for requesting uplink scheduling) to STA 1-2. Transmission of the trigger frame may be scheduled by AAR control information. The trigger frame may be transmitted after a channel access procedure of AP 2-2 is successful. STA 1-2 may receive the trigger frame from AP 2-2 and transmit a data frame (e.g., an UL data frame) to AP 2-2. Transmission of the UL data frame may be triggered by the trigger frame. AP 2-2 may receive the data frame from STA 1-2 and transmit a response frame to the data frame to STA 1-2. AP 2-2 may have obtained a TXOP by transmitting the trigger frame. If there is a remaining TXOP period, AP 2-2 may transmit a trigger frame or downlink frame to STA 1-2 or another STA.

A QoS Null frame may be a QoS data frame. A QoS Null frame may be a frame without a frame body in a QoS data frame. The A-Control field of the QoS data frame may include NSTR control information and/or AAR control information. Alternatively, at least one of the NSTR control information or the AAR control information may be included in the QoS Null frame or another frame in the form of an information element (e.g., an element).

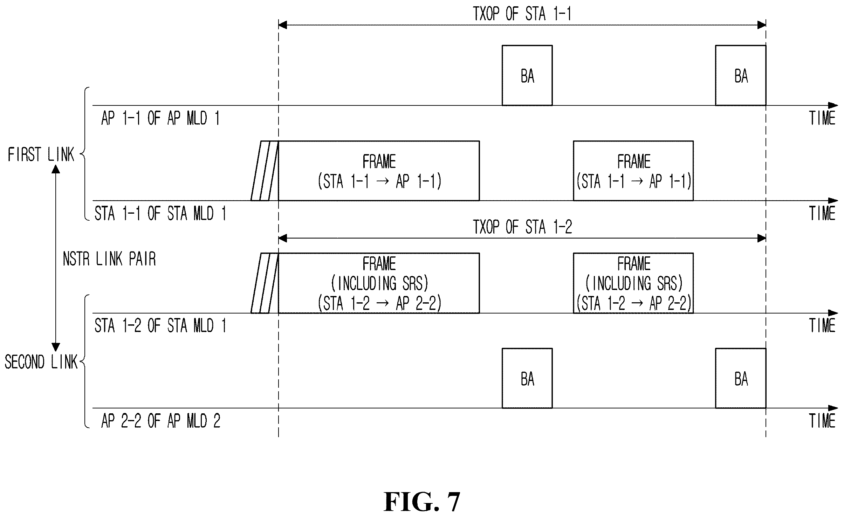

FIG. 7 is a timing diagram illustrating embodiments of multi-link communication.

Referring to FIG. 7, STA MLD 1 may operate in multiple links. STA MLD 1 may access (e.g., associate) one or more AP MLDs. For example, STA MLD 1 may be simultaneously associated with AP MLD 1 and AP MLD 2. AP MLD 1 may be a primary AP MLD, and AP MLD 2 may be a secondary AP MLD. STA MLD 1 may perform an association procedure with each of AP MLD 1 and AP MLD 2. In the association procedure, STA MLD 1 may transmit a frame including capability information of the STA MLD 1 (e.g., a probe request frame, an association request frame, etc.) to AP MLD 1 and/or AP MLD 2. The capability information may include at least one of information indicating whether STA MLD 1 supports STR operation, information indicating whether STA MLD 1 supports EMLSR operation, information indicating whether STA MLD 1 supports joint transmission by multiple APs, or information indicating whether STA MLD 1 supports preemption operation. AP MLD 1 and AP MLD 2 may be connected via a backhaul link. A frame exchange procedure between AP MLD 1 and AP MLD 2 may be performed via the backhaul link. AP MLD 1 and AP MLD 2 may transmit frames to STA MLD based on a coordination transmission scheme (e.g., a joint transmission scheme).

AP MLD 1 and AP MLD 2 may include separate MAC layer element(s) (e.g., an upper MAC sublayer, a lower MAC sublayer, and/or an MLME). A MAC layer element may mean a MAC layer entity. At least one of the MAC layer element(s) of AP MLD 1 and AP MLD 2 may be an integrated element (e.g., an interlocked element, a linked element). The integrated element may be commonly included in AP MLD 1 and AP MLD 2. For example, AP MLD 1 and AP MLD 2 may include an integrated upper MAC sublayer. AP MLD 1 and AP MLD 2 may not include an integrated lower MAC sublayer.

AP MLD 1 and AP MLD 2 may assign (e.g., allocate, set) separate AIDs to STA MLD 1. For example, AP MLD 1 may assign AID 1111 to STA MLD 1. AP MLD 2 may assign AID 2222 to STA MLD 1. In other words, the AID assigned by AP MLD 1 to STA MLD 1 may be 1111, and the AID assigned by AP MLD 2 to STA MLD 1 may be 2222. Alternatively, AP MLD 1 and AP MLD 2 may manage the same AID for STA MLD 1. For example, AP MLD 1 and AP MLD 2 may assign AID 1111 to STA MLD 1, and the common AID for STA MLD 1 may be 1111. STA MLD 1 may be identified and/or managed by the common AID (e.g., 1111).

Each of the AP MLD and the STA MLD may operate in multiple links. The multiple links may include a first link and a second link. An STA associated with STA MLD 1 (e.g., non-AP MLD) operating on the first link may be referred to as STA 1-1, and an STA associated with STA MLD 1 operating on the second link may be referred to as STA 1-2. STA 1-1 and STA 1-2 may be associated with STA MLD 1. An STA associated with STA MLD 1 operating in the x-th link may be referred to as STA 1-x. x may be a natural number. An AP associated with AP MLD 1 operating on the first link may be referred to as AP 1-1, and an AP associated with AP MLD 1 operating on the second link may be referred to as AP 1-2. AP 1-1 and AP 1-2 may be associated with AP MLD 1. An AP associated with AP MLD 1 operating in the x-th link may be referred to as AP 1-x. An AP associated with AP MLD 2 operating on the first link may be referred to as AP 2-1, and an AP associated with AP MLD 2 operating on the second link may be referred to as AP 2-2. AP 2-1 and AP 2-2 may be associated with AP MLD 2. An AP associated with AP MLD 2 operating in the x-th link may be referred to as AP 2-x.

AP MLD 1 and AP MLD 2 may have at least one common link (e.g., common frequency, common operating frequency). For example, AP MLD 1 and AP MLD 2 may operate on a first link. Even if the operating frequencies (e.g., links) of AP MLD 1 and AP MLD 2 are the same, the link IDs (e.g., frequency identifiers) managed by AP MLD 1 and AP MLD 2 may be different. When AP MLD 1 and AP MLD 2 operate on the first link, the link ID managed by AP MLD 1 may be different from the link ID managed by AP MLD 2. "When the AP MLDs have different link IDs and the operating frequencies corresponding to the different link IDs are the same", the different link IDs may indicate the same link. Alternatively, AP MLD 1 and AP MLD 2 may not have a common link.

The operating links (e.g., operating frequency) of STA MLD 1 may include a first link and a second link. The first link and the second link may be an NSTR link pair for STA MLD 1. In the NSTR link pair, STA MLD 1 may not perform the STR operation. Additionally, STA MLD 1 may perform an EMLSR operation on the first link and the second link. The first link and the second link may be EMLSR links. In other words, when STA MLD 1 performs the EMLSR operation on the first link and the second link, the first link and the second link may be an NSTR link pair and an EMLSR link. AP MLD 1 may operate on the first link. AP MLD 2 may operate on the second link. STA MLD 1 may communicate with AP MLD 1 on the first link. STA MLD 1 may communicate with AP MLD 2 on the second link.

In the embodiment of FIG. 7, if there is a frame (e.g., MPDU, A-MPDU, PPDU, or other data unit) to be transmitted to AP 1-1 on the first link, STA 1-1 of STA MLD 1 may perform a channel access operation on the first link. If there is a frame (e.g., MPDU, A-MPDU, PPDU, or other data unit) to be transmitted to AP 2-2 on the second link, STA 1-2 of STA MLD 1 may perform a channel access operation on the second link. The channel access operation may be an EDCA-based operation. In other words, the channel access operation may be an EDCA operation.

The frame may be transmitted simultaneously from STA 1-1 and STA 1-2. In other words, STA 1-1 and STA 1-2 may transmit the frame based on a synchronous transmission method. When a synchronous transmission method is used, the transmission start time point and/or the transmission end time point of the frame on the first link may be the same as the transmission start time point and/or the transmission end time point of the frame on the second link. Alternatively, a difference between the transmission start time point of the frame on the first link and the transmission start time point of the frame on the second link may be 4 us or less. Alternatively, a difference between the transmission end time point of the frame on the first link and the transmission end time point of the frame on the second link may be 8 us or less.

At the time of transmission initiation of STA 1-1, the TXOP of STA 1-1 may be set. At the time of transmission initiation of STA 1-2, the TXOP of STA 1-2 may be set. In another way, "when transmission of a frame of STA 1-1 (e.g., initial transmission) is performed and a response frame (e.g., ACK frame, BA frame) to the frame is successfully received", the TXOP of STA 1-1 may be set. "When transmission of a frame of STA 1-2 (e.g., initial transmission) is performed and a response frame (e.g., ACK frame, BA frame) to the frame is successfully received", the TXOP of STA 1-2 may be set.

The frame transmitted by STA 1-1 and/or the frame transmitted by STA 1-2 may include SRS (single response scheduling) control information. The SRS control information may be information for indicating the length of a response frame to the frame of STA 1-1 and/or STA 1-2. The SRS control information may be included in the HT control field of the MAC header of the frame in the form of A-control. The SRS control information included in the frame of STA 1-1 may be identical to the SRS control information included in the frame of STA 1-2. In this case, the length of the response frame that STA 1-1 indicates to AP 1-1 may be identical to the length of the response frame that STA 1-2 indicates to AP 2-2. The start time point of the response frame of AP 1-1 on the first link may be synchronized with the start time point of the response frame of AP 2-2 on the second link. In other words, the start time point of the response frame of AP 1-1 on the first link may be the same as the start time point of the response frame of AP 2-2 on the second link. STA 1-1 and STA 1-2 may perform synchronized frame transmission within a TXOP based on the above method. In other words, STA 1-1 and STA 1-2 may transmit frames based on a synchronous transmission method. STA 1-1 and STA 1-2 may each transmit one or more frames within a TXOP.

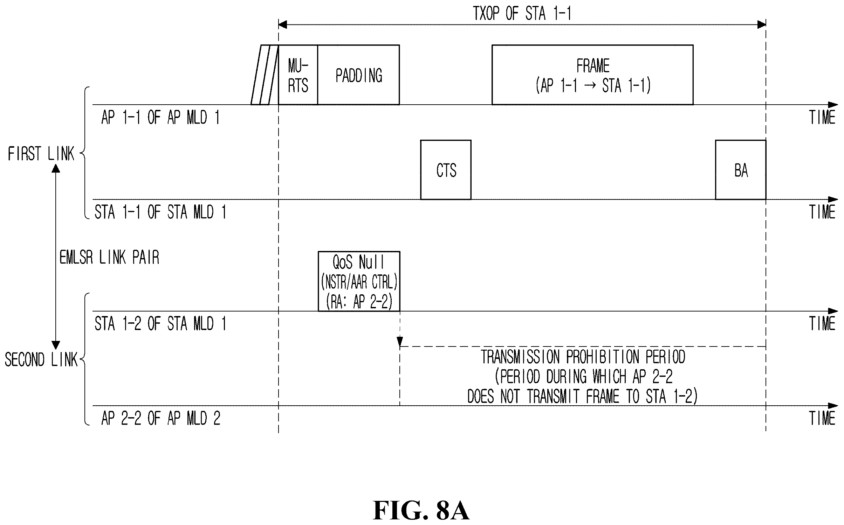

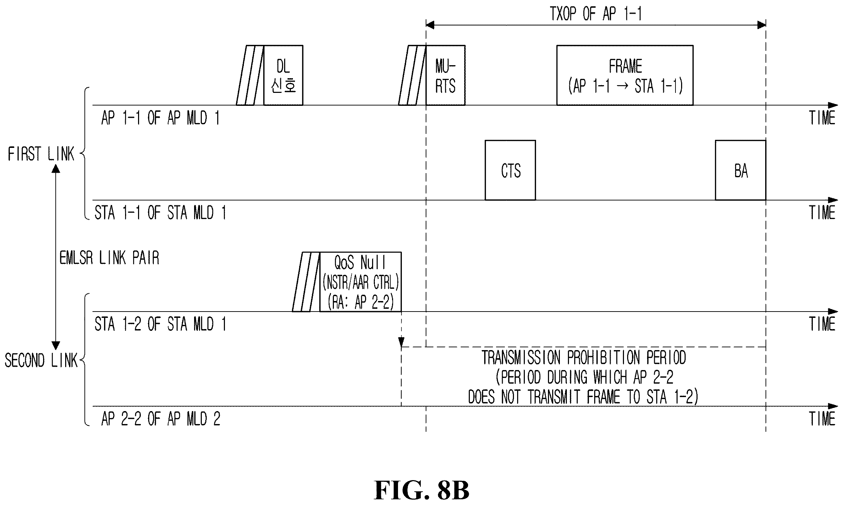

FIGS. 8a and 8b are timing diagrams illustrating embodiments of multi-link communication.

Referring to FIGS. 8A and 8B, STA MLD 1 may operate in multiple links. STA MLD 1 may access (e.g., associate) one or more AP MLDs. For example, STA MLD 1 may be simultaneously associated with AP MLD 1 and AP MLD 2 simultaneously. AP MLD 1 may be a primary AP MLD, and AP MLD 2 may be a secondary AP MLD. STA MLD 1 may perform an association procedure with each of AP MLD 1 and AP MLD 2. In the association procedure, STA MLD 1 may transmit a frame including capability information of the STA MLD 1 (e.g., a probe request frame, an association request frame, etc.) to AP MLD 1 and/or AP MLD 2. The capability information may include at least one of information indicating whether STA MLD 1 supports STR operation, information indicating whether STA MLD 1 supports EMLSR operation, information indicating whether STA MLD 1 supports joint transmission by multiple APs, or information indicating whether STA MLD 1 supports preemption operation. AP MLD 1 and AP MLD 2 may be connected via a backhaul link. A frame exchange procedure between AP MLD 1 and AP MLD 2 may be performed via the backhaul link. AP MLD 1 and AP MLD 2 may transmit frames to STA MLD based on a coordination transmission scheme (e.g., a joint transmission scheme).

AP MLD 1 and AP MLD 2 may include separate MAC layer element(s) (e.g., an upper MAC sublayer, a lower MAC sublayer, and/or an MLME). A MAC layer element may mean a MAC layer entity. At least one of the MAC layer element(s) of AP MLD 1 and AP MLD 2 may be an integrated element (e.g., an interlocked element, a linked element). The integrated element may be commonly included in AP MLD 1 and AP MLD 2. For example, AP MLD 1 and AP MLD 2 may include an integrated upper MAC sublayer. AP MLD 1 and AP MLD 2 may not include an integrated lower MAC sublayer.

AP MLD 1 and AP MLD 2 may assign (e.g., allocate, set) separate AIDs to STA MLD 1. For example, AP MLD 1 may assign AID 1111 to STA MLD 1. AP MLD 2 may assign AID 2222 to STA MLD 1. In other words, the AID assigned by AP MLD 1 to STA MLD 1 may be 1111, and the AID assigned by AP MLD 2 to STA MLD 1 may be 2222. Alternatively, AP MLD 1 and AP MLD 2 may manage the same AID for STA MLD 1. For example, AP MLD 1 and AP MLD 2 may assign AID 1111 to STA MLD 1, and the common AID for STA MLD 1 may be 1111. STA MLD 1 may be identified and/or managed by a common AID (e.g., 1111).

Each of the AP MLD and the STA MLD may operate in multiple links. The multiple links may include a first link and a second link. An STA associated with STA MLD 1 (e.g., non-AP MLD) operating on the first link may be referred to as STA 1-1, and an STA associated with STA MLD 1 operating on the second link may be referred to as STA 1-2. STA 1-1 and STA 1-2 may be associated with STA MLD 1. An STA associated with STA MLD 1 operating in the x-th link may be referred to as STA 1-x. x may be a natural number. An AP associated with AP MLD 1 operating on the first link may be referred to as AP 1-1, and an AP associated with AP MLD 1 operating on the second link may be referred to as AP 1-2. AP 1-1 and AP 1-2 may be associated with AP MLD 1. An AP associated with AP MLD 1 operating in the x-th link may be referred to as AP 1-x. An AP associated with AP MLD 2 operating on the first link may be referred to as AP 2-1, and an AP associated with AP MLD 2 operating on the second link may be referred to as AP 2-2. AP 2-1 and AP 2-2 may be associated with AP MLD 2. An AP associated with AP MLD 2 operating in the x-th link may be referred to as AP 2-x.

AP MLD 1 and AP MLD 2 may have at least one common link (e.g., common frequency, common operating frequency). For example, AP MLD 1 and AP MLD 2 may operate on a first link. Even if the operating frequencies (e.g., links) of AP MLD 1 and AP MLD 2 are the same, the link IDs (e.g., frequency identifiers) managed by AP MLD 1 and AP MLD 2 may be different. When AP MLD 1 and AP MLD 2 operate on the first link, the link ID managed by AP MLD 1 may be different from the link ID managed by AP MLD 2. "When the AP MLDs have different link IDs and the operating frequencies corresponding to the different link IDs are the same", the different link IDs may indicate the same link. Alternatively, AP MLD 1 and AP MLD 2 may not have a common link.

The operating links (e.g., operating frequency) of STA MLD 1 may include a first link and a second link. Additionally, STA MLD 1 may perform EMLSR operations on the first link and the second link. The first link and the second link may be EMLSR links. In other words, when STA MLD 1 performs the EMLSR operation on the first link and the second link, the first link and the second link may be an NSTR link pair and an EMLSR link. The STR operation of STA MLD 1 may be impossible on the first link and the second link. AP MLD 1 may operate on the first link. AP MLD 2 may operate on the second link. STA MLD 1 may communicate with AP MLD 1 on the first link and with AP MLD 2 on the second link.

In the embodiment of FIG. 8a, if there is a frame (e.g., MPDU, A-MPDU, PPDU, or other data unit) to be transmitted to STA 1-1 on the first link, AP 1-1 of STA MLD 1 may perform a channel access operation on the first link. The channel access operation may be an EDCA-based operation. In other words, the channel access operation may be an EDCA operation. If a backoff counter (e.g., an EDCA backoff counter) reaches 0, AP 1-1 may initiate frame transmission to STA 1-1. "The backoff counter reaching 0" may mean "the backoff operation (e.g., the channel access operation, the EDCA operation) is successful."

AP 1-1 may set a TXOP. When the backoff counter reaches 0 and the EDCAF of AP 1-1 decides frame transmission, the TXOP of AP 1-1 may be set. Alternatively, if "transmission of a frame (e.g., initial transmission) is performed and a response frame (e.g., ACK frame, BA frame) to the frame is successfully received", the TXOP may be set.

Since STA MLD 1, to which STA 1-1 is associated, performs an EMLSR operation, AP 1-1 may transmit an initial control frame (e.g., an MU (multi-user)-RTS (request to send) frame) to STA 1-1. The MU-RTS frame may be an MU-RTS trigger frame, and the MU-RTS trigger frame may be a variant of a general trigger frame. The initial control frame may be an EMLSR initial control frame. The MU-RTS frame may have a very long padding field. For example, the length of the padding field of the MU-RTS frame may be set to be equal to or greater than "the time required for transition of the EMLSR operation state of STA 1-1 + the transmission time of the QoS Null frame." The padding field may include bits for increasing the length of the frame. The padding field may be a padding field of the trigger frame.

On the first link, STA 1-1 of STA MLD 1 may receive an MU-RTS frame from AP 1-1. While STA 1-1 receives the padding field of the MU-RTS frame on the first link, STA 1-2 may transmit a QoS Null frame to AP 2-2 on the second link. The QoS Null frame may be used to configure (e.g., indicate) a transmission prohibition period. In the transmission prohibition period configured by the QoS Null frame, AP 2-2 may not transmit a frame to STA 1-2. In other words, AP 2-2 transmitting the frame to STA 1-2 may be prohibited (e.g., restricted) in the transmission prohibition period. It may be possible for AP 2-2 to transmit the frame to an STA other than STA 1-2 in the transmission prohibition period. As in the embodiment of FIG. 5a, the QoS Null frame may include NSTR control information, and the transmission prohibition period may be configured based on configuration information of the transmission prohibition period included in the NSTR control information. Alternatively, as in the embodiment of FIG. 5b, the QoS Null frame may include NSTR control information and AAR control information. The transmission prohibition period may be configured based on the configuration information of the transmission prohibition period included in the NSTR control information, and after the end of the transmission prohibition period, the transmission operation of the trigger frame of AP 2-2 and the uplink transmission operation of STA 1-2 according to the trigger frame may be performed based on the AAR control information.

After the transmission of the QoS Null frame of STA 1-2 is terminated on the second link, STA 1-1 may transmit a CTS (clear to send) frame to AP 1-1 in response to the MU-RTS frame. AP 1-1 may receive the CTS frame from STA 1-1. After receiving the CTS frame of STA 1-1, AP 1-1 may transmit one or more frames (e.g., a DL (downlink) frame, a DL data frame) to STA 1-1 within a TXOP. Alternatively, the MU-RTS frame of AP 1-1 and the QoS Null frame of AP 1-2 may be transmitted based on a synchronous transmission method. In other words, the transmission of the MU-RTS frame may be synchronized with the transmission of the QoS Null frame. The MU-RTS frame and/or the QoS Null frame may be transmitted in a broadcast manner. The QoS Null frame may include NSTR control information and/or AAR control information. Alternatively, STA 1-2 may transmit the QoS Null frame before AP 1-1 transmits the MU-RTS frame.

In the embodiment of FIG. 8b, if there is a frame (e.g., MPDU, A-MPDU, PPDU, or other data unit) to be transmitted to STA 1-1 on the first link, AP 1-1 of AP MLD 1 may perform a channel access operation on the first link. The channel access operation may be an EDCA-based operation. In other words, the channel access operation may be an EDCA operation. If a backoff counter (e.g., an EDCA backoff counter) reaches 0, AP 1-1 may initiate frame transmission to STA 1-1. "The backoff counter reaching 0" may mean "the backoff operation (e.g., the channel access operation, the EDCA operation) is successful."

AP 1-1 may set a TXOP. When the backoff counter reaches 0 and the EDCAF of AP 1-1 decides frame transmission, the TXOP of AP 1-1 may be set. Alternatively, when "transmission of a frame (e.g., an initial transmission) is performed and a response frame (e.g., an ACK frame, a BA frame) to the frame is successfully received", the TXOP may be set. The response frame may mean an ACK frame and/or a BA frame.

Since STA MLD 1, to which STA 1-1 is associated, performs an EMLSR operation, AP 1-1 may transmit an initial control frame (e.g., an MU-RTS frame) to STA 1-1. The initial control frame may be an EMLSR initial control frame. The first MU-RTS frame (e.g., an initial control frame) that AP 1-1 transmits to STA 1-1 may be referred to as a DL signal. The DL signal may include information indicating the length of data (e.g., a data unit, a frame) transmitted by AP 1-1 to STA 1-1. Transmission of a response frame to the DL signal may not be required. Therefore, STA 1-1 may not transmit a response frame to the DL signal to AP 1-1. Alternatively, STA 1-1 may transmit a CTS frame to AP 1-1 in response to the DL signal.

On the first link, STA 1-1 of STA MLD 1 may receive a DL signal (e.g., an initial MU-RTS frame) from AP 1-1. After receiving the DL signal of AP 1-1, STA 1-2 may transmit a QoS Null frame to AP 2-2 by performing a backoff procedure on the second link. The QoS Null frame may be transmitted if the backoff procedure is successful. The QoS Null frame may be used to configure (e.g., indicate) a transmission prohibition period. In the transmission prohibition period configured by the QoS Null frame, AP 2-2 may not transmit the frame to STA 1-2. In other words, AP 2-2 transmitting the frame to STA 1-2 may be prohibited (e.g., restricted) in the transmission prohibition period. It may be possible for AP 2-2 to transmit the frame to an STA other than STA 1-2 in the transmission prohibition period.

As in the embodiment of FIG. 5a, the QoS Null frame may include NSTR control information, and the transmission prohibition period may be configured based on configuration information of the transmission prohibition period included in the NSTR control information. Alternatively, as in the embodiment of FIG. 5b, the QoS Null frame may include NSTR control information and AAR control information. The transmission prohibition period may be configured based on the configuration information of the transmission prohibition period included in the NSTR control information, and after the end of the transmission prohibition period, the transmission operation of the trigger frame of AP 2-2 and the uplink transmission operation of STA 1-2 according to the trigger frame may be performed based on the AAR control information.

After the transmission of the QoS Null frame of STA 1-2 is terminated on the second link, AP 1-1 may transmit an initial control frame (e.g., an MU-RTS frame) to STA 1-1 by performing a backoff procedure. STA 1-1 may receive the MU-RTS frame from AP 1-1, and in response to the MU-RTS frame, may transmit a CTS frame to AP 1-1. AP 1-1 may receive the CTS frame from STA 1-1, and after receiving the CTS frame, may transmit one or more frames (e.g., a DL frame, a DL data frame) to STA 1-1 within a TXOP.

A QoS Null frame may be a QoS data frame. A QoS Null frame may be a frame without a frame body in a QoS data frame. The A-Control field of the QoS data frame may include NSTR control information and/or AAR control information. Alternatively, at least one of the NSTR control information or the AAR control information may be included in the QoS Null frame or another frame in the form of an information element (e.g., an element).

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

In addition, the computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device (e.g., a field-programmable gate array) may be used to perform some or all of functions of the methods described herein. In some exemplary embodiments, the field-programmable gate array may be operated with a microprocessor to perform one of the methods described herein. In general, the methods are preferably performed by a certain hardware device.

While the present disclosure has been described above with reference to preferred embodiments of the present disclosure, those skilled in the art will understand that various modifications and variations may be made to the present disclosure without departing from the scope and spirit of the present disclosure, which are defined by the Claims appended hereto.

## Claims

1. A method of a first access point (AP) multi-link device (MLD), the method comprising:
decoding a first frame transmitted and received between a station (STA) MLD and a second AP MLD on a first link; and
in case that the first link and the second link are a non-simultaneous transmit and receive (NSTR) link pair for the STA MLD, configuring a transmission prohibition period on the second link based on one or more fields included in the first frame,
wherein transmission of a second frame by the first AP MLD to the STA MLD is restricted in the transmission prohibition period.

2. The method of claim 1, wherein the first frame is an uplink (UL) frame transmitted by the STA MLD to the second AP MLD or a downlink (DL) frame transmitted by the second AP MLD to the STA MLD.

3. The method of claim 1, wherein the transmission prohibition period is configured to correspond to a length indicated by a duration field included in a medium access control (MAC) header of the first frame.

4. The method of claim 1, wherein the transmission prohibition period is configured based on a length of the first frame indicated by a field included in a preamble of the first frame.

5. The method of claim 1, wherein the transmission prohibition period is configured to correspond to a transmit opportunity (TXOP) of the STA MLD on the first link.

6. The method of claim 1, further comprising performing an association procedure between the STA MLD and the first AP MLD,
wherein in the association procedure, capability information of the STA MLD is received and the capability information includes information indicating that the STA MLD does not support STR operation.

7. The method of claim 1, wherein each of the STA MLD, the first AP MLD and the second AP MLD operates in multiple links including the first link and the second link, and the STA MLD is associated with the first AP MLD and the second AP MLD.

8. A method of a station (STA) multi-link device (MLD), the method comprising:
transmitting a first frame including configuration information of a transmission prohibition period to a first access point (AP) MLD on a first link; and
transmitting a second frame to a second AP MLD on the first link,
wherein the transmission prohibition period is configured on a second link based on the configuration information and transmission of a third frame by the first AP MLD to the STA MLD is restricted in the transmission prohibition period.

9. The method of claim 8, wherein the configuration information of the transmission prohibition period includes at least one of information on link(s) to which the transmission prohibition period is applied, a length of the transmission prohibition period, a start time point of the transmission prohibition period, an end time point of the transmission prohibition period or information on a communication node where the transmission prohibition period is configured.

10. The method of claim 8, wherein the first frame is a first medium access control (MAC) layer protocol data unit (MPDU), the second frame is a second MPDU, and the first MPDU and the second MPDU are included in one physical layer protocol data unit (PPDU) in the form of an aggregated (A)-MPDU.

11. The method of claim 8, wherein the transmission prohibition period is configured to correspond to a transmit opportunity (TXOP) of the STA MLD.

12. The method of claim 8, wherein the first frame further includes assisted AP request (AAR) control information, and the AAR control information indicates that a trigger-based transmission procedure is performed after the transmission prohibition period.

13. The method of claim 8, further comprising:
performing a first association procedure between the STA MLD and the first AP MLD; and
performing a second association procedure between the STA MLD and the second AP MLD,
wherein in one of the first association procedure or the second association procedure, capability information of the STA MLD is transmitted, and the capability information includes information indicating that the STA MLD does not support simultaneous transmit and receive (STR) operation.

14. A method of a station (STA) multi-link device (MLD), the method comprising:
transmitting a first frame including configuration information of a transmission prohibition period to a first access point (AP) MLD on a first link; and
transmitting a second frame to a second AP MLD on a second link,
wherein the transmission prohibition period is configured on the first link based on the configuration information and transmission of a third frame by the first AP MLD to the STA MLD is restricted in the transmission prohibition period.

15. The method of claim 14, wherein the configuration information of the transmission prohibition period includes at least one of information on link(s) to which the transmission prohibition period is applied, a length of the transmission prohibition period, a start time point of the transmission prohibition period, an end time point of the transmission prohibition period or information on a communication node where the transmission prohibition period is configured.

16. The method of claim 14, wherein the first frame and the second frame are transmitted based on a synchronous transmission method, and in case that the synchronous transmission method is used, a first start time point of the first frame is the same as a second start time point of the second frame or a difference between the first start time point and the second start time point is within a predefined range.

17. The method of claim 14, wherein the transmission prohibition period is configured to correspond to a transmit opportunity (TXOP) of the STA MLD.

18. The method of claim 14, wherein the first frame further includes assisted AP request (AAR) control information, and the AAR control information indicates that a trigger-based transmission procedure is performed after the transmission prohibition period.

19. The method of claim 18, wherein in the trigger-based transmission procedure, in case that a trigger frame is received from the first AP MLD, the STA MLD transmits a fourth frame to the first AP MLD.

20. The method of claim 14, further comprising:
performing a first association procedure between the STA MLD and the first AP MLD; and
performing a second association procedure between the STA MLD and the second AP MLD,
wherein in one of the first association procedure or the second association procedure, capability information of the STA MLD is transmitted, and the capability information includes information indicating that the STA MLD does not support simultaneous transmit and receive (STR) operation.
